(19) Europäisches Patentamt
European Patent Office
Office européen des brevets

(11) EP 3 164 441 B1

(12) EUROPÄISCHE PATENTSCHRIFT

(45) Veröffentlichungstag und Bekanntmachung des Hinweises auf die Patenterteilung:
**18.04.2018 Patentblatt 2018/16**

(21) Anmeldenummer: **15732706.5**

(22) Anmeldetag: **30.06.2015**

(51) Int Cl.:
***C08G 64/20*** (2006.01) ***C08G 64/34*** (2006.01)
***C08G 65/26*** (2006.01)

(86) Internationale Anmeldenummer:
**PCT/EP2015/064843**

(87) Internationale Veröffentlichungsnummer:
**WO 2016/001221 (07.01.2016 Gazette 2016/01)**

(54) **VERFAHREN ZUR HERSTELLUNG VON POLYETHERCARBONATPOLYOLEN UND VORRICHTUNG HIERFÜR**

METHOD FOR PRODUCING POLYETHER CARBONATE POLYOLS AND DEVICE FOR THE SAME

PROCÉDÉ DESTINÉ À LA FABRICATION DE POLYÉTHERCARBONATPOLYOLES ET DISPOSITIF ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2014 EP 14175606**

(43) Veröffentlichungstag der Anmeldung:
**10.05.2017 Patentblatt 2017/19**

(73) Patentinhaber: **Covestro Deutschland AG**
**51373 Leverkusen (DE)**

(72) Erfinder:
- **BRAUN, Stefanie**
**51069 Köln (DE)**
- **ZWICK, Horst**
**41539 Dormagen (DE)**
- **WOHAK, Matthias**
**41540 Dormagen (DE)**
- **HOFMANN, Jörg**
**47800 Krefeld (DE)**
- **WOLF, Aurel**
**42489 Wülfrath (DE)**
- **TRAVING, Michael**
**51399 Burscheid (DE)**
- **BACHMANN, Rolf**
**51469 Bergisch Gladbach (DE)**

(74) Vertreter: **Levpat**
**c/o Covestro AG**
**Gebäude 4825**
**51365 Leverkusen (DE)**

(56) Entgegenhaltungen:
**EP-A1- 2 441 788 EP-A1- 2 604 641**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von Polyethercarbonatpolyolen durch Anlagerung von einem oder mehreren Alkylenoxiden und Kohlendioxid an eine oder mehrere H-funktionellen Startersubstanzen in Gegenwart mindestens eines DMC-Katalysators, bei dem die Reaktion in einem Hauptreaktor und einem sich an diesen stromabwärts anschließenden Rohrreaktor als Nachreaktor durchgeführt wird. Die Erfindung betrifft ferner eine Vorrichtung zur Durchführung dieses Verfahrens.

Die Herstellung von Polyethercarbonatpolyolen durch katalytische Anlagerung von Alkylenoxiden (Epoxiden) und Kohlendioxid an H-funktionellen Startersubstanzen (Starter) wurde seit mehr als 40 Jahren intensiv untersucht (Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters kann aber variieren und ist nicht auf das in Schema (I) gezeigte Polyethercarbonatpolyol beschränkt. Diese Reaktion (siehe Schema (I)) ist ökologisch sehr vorteilhaft, da diese Reaktion die Umsetzung eines Treibhausgases wie Kohlendioxid ($CO_2$) zu einem Polymer darstellt. Als weiteres Produkt entsteht das in Formel (I) gezeigte cyclische Carbonat (beispielsweise für R = $CH_3$ Propylencarbonat).

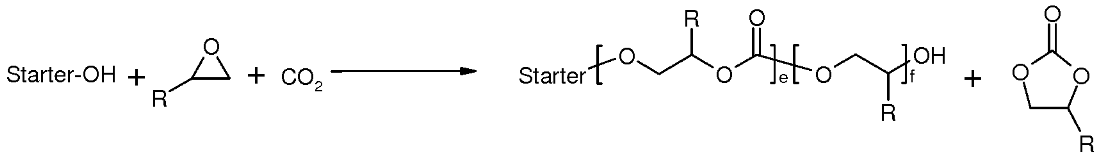
(I)

Die Bildung von Copolymeren aus Epoxiden (z.B. Propylenoxid) und Kohlendioxid ist seit langem bekannt. So beschreibt zum Beispiel US 4500704 die Copolymerisation von Kohlendioxid und Propylenoxid unter Verwendung von DMC-Katalysatoren. Es handelt sich bei dem Verfahren um ein Batch-Verfahren, d.h. Katalysator und die vollständige Menge Propylenoxid werden vor Beginn der Reaktion eingefüllt und vor dem Erhitzen mit Kohlendioxid beaufschlagt. Durch die Befüllung des Autoklaven mit der Gesamtmenge Epoxid ergibt sich jedoch der Nachteil, dass eine große Menge Propylenoxid vorgelegt wird, die im Falle einer Homo-Polymerisation zur Freisetzung von ca. 1400 kJ/kg Polymer führen kann. Derartig hohe Wärmemengen lassen sich in einem Rührkessel nur schwer beherrschen und bringen damit Nachteile aus Gründen eines sicheren Betriebs mit sich.

Unter einer Batch-Fahrweise im Sinne dieser Erfindung wird verstanden, dass sämtliche Edukte, also Epoxid(e), gegebenenfalls H-funktionelle Startersubstanz(en) und Kohlendioxid, vor Beginn der Reaktion in den Reaktor eingebracht werden. Im Rahmen dieser Erfindung wird unter einer Semibatch-Fahrweise verstanden, dass wenigstens einer der zuvor genannten Stoffe über einen gewissen Zeitraum dem Reaktor zugeführt wird.

WO-A 2006/103213 beschreibt beispielhaft ein semi-batchartiges Verfahren, wo die H-funktionelle Startersubstanz und der Katalysator vorgelegt werden und dort getrocknet werden. Nach Aktivierung des Katalysators durch Zugabe einer Teilmenge des Propylenoxids wird weiteres Propylenoxid kontinuierlich in den Reaktor dosiert und der gewünschte $CO_2$-Druck eingestellt. Die kontinuierliche Zugabe von Propylenoxid trägt u.a. einem verbesserten Sicherheitskonzept Rechnung. Ein Nachteil dieser Fahrweise in Verbindung mit einem Autoklav bzw. Rührkessel ist jedoch, dass sich abhängig vom Reaktorvolumen, der Füllhöhe des Reaktors, den Eigenschaften der flüssigen Phase, der Zusammensetzung der Gasphase und weiteren Parametern bei einem voreingestellten Startdruck und einer voreingestellten Temperatur eine veränderliche Menge an Kohlendioxid im Reaktor ergibt. Das bedeutet, dass während der Reaktion die verfügbare Menge an Kohlendioxid bei konstanter Temperatur unterschiedlich ist in Abhängigkeit von den zuvor genannten Parametern. Um den Druck konstant zu halten ist es erforderlich, Kohlendioxid nachzudosieren, wobei auch Löslichkeitseffekte zu berücksichtigen sind. Ferner liegt zu Beginn der Reaktion zunächst eine hohe und dann im Verlauf der Reaktion kontinuierlich sinkende Menge an Katalysator vor. Diese Parameter nehmen in der Regel auf die Produkteigenschaften Einfluss. Außerdem ist zu erwarten, dass bei diesem Verfahrenskonzept gemäß der Offenbarung von WO-A 2008/092767 DMC-Katalysatoren mit niedermolekularen H-funktionellen Startersubstanzen (wie beispielsweise Wasser, Propylenglykol, Glyzerin) ein sehr schlechtes Reaktionsverhalten aufweisen, beziehungsweise keine Reaktion zeigen. Da niedermolekulare Startersubstanzen inhibierend wirken, können diese insbesondere bei Batch- oder Semibatch-Prozessen, bei denen die gesamte H-funktionelle Startersubstanzmenge vorgelegt wird, nicht oder nur schwer eingesetzt werden.

WO-A 2008/092767 offenbart ein Verfahren zur Herstellung von Polyethercarbonatpolyolen durch Anlagerung

von Alkylenoxiden und Kohlendioxid an H-funktionelle Startersubstanzen unter Verwendung von DMC-Katalysatoren, wobei eine oder mehrere höhermolekulare Startersubstanzen (z.B. Polypropylenoxid der Molmasse 460 g/mol) im Reaktor vorgelegt werden und eine oder mehrere niedermolekulare Startersubstanzen (z.B. Monopropylenglykol; Molmasse 76 g/mol; siehe Beispiel 1) sowie Alkylenoxid während der Reaktion kontinuierlich in den Reaktor zudosiert werden. Gemäß WO-A 2008/092767 ist die Menge des ins Polymer eingebauten Kohlendioxids abhängig vom $CO_2$-Druck im Reaktor, wobei ein höherer $CO_2$-Druck einen höheren Einbau von Kohlendioxid ins Polymer zur Folge hat. Dies hat die Nachteile, dass in der Anschaffung kostenintensive Hochdruckapparaturen für eine großtechnische Herstellung von Polyethercarbonatpolyolen erforderlich sind und gleichzeitig wegen des relativ großen Gasvolumens ein aufwendiges Sicherheitskonzept bereitgestellt werden muss.

Ein weiterer Nachteil der im Stand der Technik offenbarten batchartigen Verfahren bzw. semibatchartigen Verfahren ist die Tatsache, dass der Katalysator zunächst aktiviert werden muss (siehe z.B. WO-A 2008/092767; Beispiel 1), was nachteiliger Weise mit einem zusätzlichen Schritt verbunden ist und damit zusätzliche Kosten verursacht.

Ein weiterer Nachteil eines Rührkessels ist das ungünstiger weise niedrige Verhältnis von Oberfläche zu Volumen, das dazu führt, dass die durch die Polymerisation freiwerdende Wärme (> 1000 kJ/kg Polymer) über die Oberfläche des Reaktors nur wenig effizient abgeführt werden kann, was sich nachteilig auf eine Temperaturkontrolle der Reaktion auswirken kann. Wird die Wärmeabfuhr mittels innen liegendem oder externem Wärmetauscher vorgenommen, hat dies den Nachteil, dass die Anschaffung eines Wärmetauschers zu einer höheren Investitionssumme für die Anlage und damit zu höheren Kosten führt. Wird eine ausreichende Wärmeabfuhr und damit eine optimale Temperatur der Reaktionsmischung nicht eingestellt, kann dies zu einer ungünstigen Selektivität der Reaktion oder Verlust an Katalysatoraktivität führen. Des Weiteren kann durch zu hohe Temperatur sowohl das Produkt zersetzt werden wie auch der Katalysator irreversibel desaktiviert werden. Ist die Wärmeabfuhr eines Rührkesselreaktors nicht ausreichend, kann die mögliche hohe Reaktionsgeschwindigkeit der hoch aktiven DMC-Katalysatoren nicht voll ausgenutzt werden, d.h. es findet eine Limitierung der maximalen Reaktionsgeschwindigkeiten aufgrund der begrenzten Wärmeabfuhrleistung dieser Reaktortypen statt, wobei in der Regel auch Reaktoren mit innen liegenden wie auch mit externen Wärmetauschern diesbezüglich limitiert sind. Die Folge ist, dass die Reaktion nur bis zu einer bestimmten Alkylenoxid-Dosiergeschwindigkeit bei konstanter Temperatur gefahren werden kann, obwohl aufgrund der hohen Aktivität des DMC-Katalysators eine höhere Alkylenoxid-Dosiergeschwindigkeit erreichbar wäre.

Ein weiterer grundsätzlicher Nachteil eines Semi-Batch- oder Batch-Verfahrens besteht darin, dass zur Produktentnahme das Verfahren gestoppt werden muss und daher ein Zeitverlust resultiert.

Eine kontinuierliche Reaktion von Alkylenoxiden und $CO_2$ kann in einem rückvermischten Reaktor (kontinuierlicher Rührkessel) stattfinden oder in einem kontinuierlichen Reaktor ohne Rückvermischung. Die kontinuierlichen Reaktoren mit Rückvermischung zeichnen sich i. a. durch die gleichen Nachteile wie die batch oder semi-batch betriebenen Rührkessel aus.

WO-A 2007/135154 offenbart eine Reaktionseinheit mit mehreren, parallel übereinander angeordneten Lagen A, B, die mikrostrukturiert sind, dergestalt, dass jede Lage eine Vielzahl von parallel zueinander angeordneten Kanälen aufweist, die von einer Seite der Platte bis zur gegenüberliegenden Seite derselben einen durchgehenden Strömungsweg ausbilden. Sie kann zur Herstellung von Polyetherpolyolen aus ein oder mehreren Alkylenoxiden und gegebenenfalls Kohlendioxid und ein oder mehreren H-funktionellen Starterverbindungen eingesetzt werden. Um eine großtechnische Produktion (world-scale) zu ermöglichen, muss ein sogenanntes "Numberingup" durchgeführt werden, was aufgrund des regelungstechnischen Aufwands zu einer unwirtschaftlichen Produktion führt. Bei Verwendung eines suspendierten heterogenen Katalysators, beispielsweise eines DMC-Katalysators entsprechend des Verfahrens der vorliegenden Erfindung, sind jedoch Probleme bezüglich der Ablagerung von Katalysator im Mikroreaktor und den parallel angeordneten Platten zu erwarten, was zu Verstopfungen in einem kontinuierlich betriebenen Verfahren führen würde.

EP 2441 788 A1 beschreibt ein Verfahren zur Herstellung von Polyethercarbonatpolyolen in einem Rohrreaktor. Die Verwendung eines zweiten, nachgeschalteten Reaktors ist nicht beschrieben.

Aus der EP 1 448 662 B1 ist ein Verfahren bekannt, bei dem eine Vorrichtung aus einem Hauptreaktor mit einem nachgeschalteten Rohrreaktor als Nachreaktor zur Herstellung von Polyetherpolyolen eingesetzt wird. Die Herstellung von Polyethercarbonatpolyolen ist hingegen nicht beschrieben.

Die EP 2 604 641 A1 beschreibt ein Verfahren zur Herstellung von Polyethercarbonatpolyolen mit zwei Reaktoren. Eine Erhöhung der Temperatur im zweiten Reaktor ist nicht beschrieben.

Es war daher Aufgabe der vorliegenden Erfindung, ein verbessertes Verfahren zur Herstellung von Polyethercarbonatpolyolen bereitzustellen, mit dem Polyethercarbonatpolyole in hoher Ausbeute und hoher Selektivität hinsichtlich der linearen Verbindungen bei vergleichsweise hoher Produktionsgeschwindigkeit hergestellt werden können. Ferner soll eine für diesen Zweck geeignete Vorrichtung zur Verfügung gestellt werden.

Diese Aufgabe wird bei einem Verfahren der eingangs genannten Art dadurch gelöst, dass am Ausgang des Rohrreaktors eine Temperatur eingestellt wird, die um wenigstens 10 °C oberhalb der Temperatur im Inneren des Hauptreaktors liegt.

Diese Lösung ist überraschend, da üblicherweise zu erwarten ist, dass es bei einer Erhöhung der Reaktionstemperatur zu einer Verschlechterung der Selektivität hinsichtlich der erwünschten linearen Produkte in Richtung der cyclischen Produkte kommt. Bei den cyclischen Produkten handelt es sich um Anlagerungsprodukte aus nicht abreagiertem Alkylenoxid und Kohlendioxid. So enthält das aus dem Hauptreaktor in den Nachreaktor überführte Rohprodukt je nach Verfahrensführung noch etwa 3 bis 4 Gew.-% an Alkylenoxiden. Diese können dann im Nachreaktor mit dem ebenfalls vorhandenen Kohlendioxid DMC-katalysiert zu cyclischen Alkylencarbonaten reagieren, beispielsweise zu cyclischem Propylencarbonat (cPc) bei Einsatz von Propylenoxid.

Als weitere Quelle, aus denen die vorgenannten cyclischen Nebenprodukte entstehen können, kommt bereits gebildetes lineares Polyethercarbonatpolyol infrage. So kann es vor allem bei erhöhten Reaktionstemperaturen unter Anwesenheit des DMC-Katalysators zum sogenannten "back-biting" kommen, bei dem insbesondere an den Kettenenden des linearen Polyethercarbonatpolyols einzelne Kettenglieder abgespalten werden, die dann wiederum zu cyclischen Alkylencarbonaten reagieren können.

Die Bildung der cyclischen Verbindungen ist für die meisten Anwendungszwecke der Polyethercarbonatpolyole unerwünscht. Weiterhin wird hierdurch die Ausbeute an gewünschten Polyethercarbonatpolyolen reduziert und die Wirtschaftlichkeit des Verfahrens ist durch die geringere Ausnutzung der Eduktströme niedriger. Die cyclischen Verbindungen müssen anschließend an die Reaktion aufwendig abgetrennt werden, so dass es üblicherweise das Ziel der Reaktionsführung ist, die Bildung der cyclischen Verbindungen von vornherein möglichst gering zu halten. Im Rahmen der vorliegenden Erfindung hat sich jedoch herausgestellt, dass entgegen der vorstehenden Erkenntnisse und Erwartungen des Fachmanns erhöhte Reaktionstemperaturen ausschließlich im Nachreaktor nicht zu einer derartigen Verschlechterung der Selektivität führen, wie dies der Fall wäre, wenn diese Reaktionstemperaturen im Hauptreaktor herrschen würden.

Ein erster Gegenstand der vorliegenden Erfindung ist daher ein Verfahren zur Herstellung von Polyethercarbonatpolyolen durch Anlagerung von einem oder mehreren Alkylenoxiden und Kohlendioxid an eine oder mehrere H-funktionellen Startersubstanzen in Gegenwart mindestens eines DMC-Katalysators, bei dem die Reaktion in einem Hauptreaktor und einem sich an diesen stromabwärts anschließenden Rohrreaktor als Nachreaktor durchgeführt wird, wobei das Verfahren dadurch gekennzeichnet ist, dass am Ausgang des Rohrreaktors eine Temperatur eingestellt wird, die um wenigstens 10 °C oberhalb der Temperatur im Inneren des Hauptreaktors liegt.

In vorteilhafter Ausgestaltung des erfindungsgemäßen Verfahrens wird am Ausgang des Rohrreaktors eine Temperatur eingestellt, die 10 bis 40°C oberhalb der Temperatur im Inneren des Hauptreaktors liegt, insbesondere 15 bis 35 °C oberhalb der Temperatur im Inneren des Hauptreaktors. Dies ist besonders vorteilhaft, da bei diesen Temperaturen einerseits eine vergleichsweise hohe Reaktionsgeschwindigkeit erzielt werden kann und dennoch die Reaktion mit einer guten Selektivität hinsichtlich der linearen Produkte abläuft.

Als Hauptreaktor wird erfindungsgemäß typischerweise ein kontinuierlich betriebener Rührreaktor verwendet. Typische Werte für die Temperatur im Inneren des Hauptreaktors bei dessen Betrieb liegen bei 95 bis 110 °C, insbesondere 100 bis 107 °C.

Bei dem erfindungsgemäßen Verfahren kann weiterhin die Temperatur am Ausgang des Rohrreaktors auch in Abhängigkeit von der Menge an nicht abreagiertem Alkylenoxid am Eingang des Rohrreaktors eingestellt werden. Konkret kann in diesem Fall die Temperatur am Ausgang des Rohrreaktors in der Weise eingestellt werden, dass diese pro Gew.-% an nicht abreagiertem Alkylenoxid gemessen am Eingang des Rohrreaktors 2,5 bis 12°C oberhalb der Temperatur im Inneren des Hauptreaktors liegt, insbesondere 3 bis 7 °C pro Gew.-% an nicht abreagiertem Alkylenoxid. Auch bei dieser Ausgestaltung des erfindungsgemäßen Verfahrens ist besonders vorteilhaft, dass bei diesen Temperaturen einerseits eine vergleichsweise hohe Reaktionsgeschwindigkeit erzielt werden kann und dennoch die Reaktion mit einer guten Selektivität hinsichtlich der linearen Produkte abläuft. Die Menge an nicht abreagiertem Alkylenoxid kann beispielsweise über MIR-Inline Sonden ermittelt werden.

Zur Realisierung der im Vergleich zum Hauptreaktor höheren Temperatur am Ausgang des Rohrreaktors kann in der Weise vorgegangen werden, dass die Einstellung der Temperatur am Ausgang des Rohrreaktors durch eine Heizeinrichtung erfolgt, die dem Rohrreaktor zugeordnet ist oder durch eine geeignete Isolierung des Rohrreaktors. Wird eine Heizeinrichtung verwendet, wird diese zweckmäßigerweise mithilfe einer am Ausgang des Rohrreaktors positionierten Temperatursonde und einer damit verbundenen geeigneten Steuerungseinrichtung geregelt.

Bei Verwendung einer Isolierung ist es zweckmäßig, eine solche Isolierung zu verwenden, die eine möglichst geringe Wärmeabstrahlung, Wärmeleitung oder Wärmeabgabe durch Konvektion des Rohrreaktors ermöglicht. Idealerweise wird hierbei eine Isolierung verwendet, die möglichst geringe Wärmeverluste nach Außen zulässt, so dass die Nachreaktion im Rohrreaktor nahezu unter adiabatischen Bedingungen ablaufen kann. Im Folgenden wird ein solcher Nachreaktor kurz als "adiabater Nachreaktor" bezeichnet.

Typische Isoliermaterialien haben im Temperaturbereich von 0 - 200°C Wärmeleitfähigkeiten $\lambda$ von 0,03 - 0,1 W/(mK) (VDI-Wärmeatlas, 2013 (DOI 10.1007/978-3-642-19981-3), Abschnitt D6.5, S.674). Wahlweise können evakuierte Ummantelungen des Rohrreaktors die Wärmeverluste weiter reduzieren. Nach VDI-Wärmeatlas, 2013 (DOI 10.1007/978-3-642-19981-3), Abschnitt El, S.721ff können die Wärmeverluste isolierter Rohre und Rohrreaktoren nach der Gleichung für mehrere konzentrische Rohrschichten berechnet werden. Beispielsweise kann der Wärmeverlust

einer Rohrleitung mit zwei Isolierschichten berechnet werden nach

$$\frac{\dot{Q}}{l} = \frac{\pi(\vartheta_i - \vartheta_a)}{\frac{1}{\alpha_i d_1} + \frac{1}{2\lambda_1} ln\left(\frac{d_2}{d_1}\right) + \frac{1}{2\lambda_2} ln\left(\frac{d_3}{d_2}\right) + \frac{1}{2\lambda_3} ln\left(\frac{d_4}{d_3}\right) + \frac{1}{\alpha_a d_4}}$$

mit $\dot{Q}$ als Wärmestrom, 1 als Längenabschnitt der isolierten Rohrleitung, mit $\alpha_i$ als innerer Wärmeübergangskoeffizient nach Kap. Gl des VDI Wärmeatlas, $\alpha_a$ als äußerer Wärmeübergangskoeffizient bei ruhender Luft nach Kap. F2 des VDI Wärmeatlas unter Einbezug des Strahlungsanteils nach Kap. Kl des VDI Wärmeatlas, $d_1$ als Innendurchmesser des inneren Rohres, $d_2$ als Außendurchmesser des inneren Rohres, $d_3$ als Außendurchmesser der ersten, inneren Isolierschicht, $d_4$ als Außendurchmesser der zweiten, äußeren Isolierschicht, ($\vartheta_i$ - $\vartheta_a$) als Temperaturdifferenz zwischen dem Inneren des inneren Rohres ($\vartheta_i$) und außerhalb des äußeren Rohres ($\vartheta_a$), $\lambda_1$ als örtliche Wärmeleitfähigkeit des Rohrmaterials des inneren Rohres, $\lambda_2$ als örtliche Wärmeleitfähigkeit der ersten inneren Isolierschicht und $\lambda_3$ als örtliche Wärmeleitfähigkeit der zweiten, äußeren Isolierschicht.

Um die Wärmeverluste unabhängig vom Maßstab des Prozesses und dem Temperaturniveau im Inneren des Rohres und der Umgebungstemperatur definieren zu können, ist es zweckmäßig, den ermittelten Quotient $\frac{\dot{Q}}{l}$ aus Wärmestrom und Längenabschnitt der isolierten Rohrleitung auf die Rohrfläche $A_1$ des inneren Rohres mit Durchmesser $d_1$ ($A_1$=π $d_1$ l) pro Längenabschnitts l und auf die Temperaturdifferenz des inneren Rohres ($\vartheta_i$) und außerhalb des äußeren Rohres ($\vartheta_a$) zu beziehen. Die spezifischen Wärmeverluste k werden als Wärmedurchgangskoeffizient bezeichnet und berechnen sich gemäß der Formel:

$$k = \frac{\frac{\dot{Q}}{l}}{\frac{A_1}{l}(\vartheta_i - \vartheta_a)}$$

Diese Bestimmungsmethode der Wärmeverluste gemäß VDI-Wärmeatlas, 2013 (DOI 10.1007/978-3-642-19981-3), Abschnitt E1 wird vorliegend auf einen mit einer Isolierschicht versehenen Rohrreaktor angewendet. Danach können in Abhängigkeit der Temperaturdifferenz zwischen Innentemperatur und Umgebungstemperatur, verwendetem Isoliermaterial, sowie Rohrdurchmesser Wärmedurchgangskoeffizienten k von 0,1 - 12 W/($m^2$K) erreicht werden, insbesondere 0,3 - 12 W/($m^2$K). Ein entsprechend isolierter Rohrreaktor hat beispielsweise einen Wärmedurchgangskoeffizient k von höchstens 12 W/($m^2$K), insbesondere von höchstens 8 W/($m^2$K), bevorzugt von höchstens 2 W/($m^2$K), besonders bevorzugt höchstens 0,5 W/($m^2$K). Zur Erreichung dieser Wärmedurchgangskoeffizienten kann der Rohrreaktor beispielsweise mit einem evakuierten Doppelmantel versehen sein, ähnlich einem verspiegelten Glasmantel, wie er auch bei Glaskolonnen zu Destillationszwecken Anwendung findet. Auch in diesem Fall ist es zweckmäßig, zur Temperaturkontrolle einen Thermofühler am Ausgang des Rohrreaktors zu positionieren mit dessen Hilfe die Einhaltung der gewünschten Mindesttemperatur überwacht werden kann. Zusätzliche Wärmeverluste können durch Einbau von Flanschen, Ventilen, Befestigungen, Verteilern und anderen Hilfseinrichtungen entstehen.

Die Auslegung des Rohrreaktors in seiner Verweilzeit stellt sicher, dass bei der eingestellten Mindesttemperatur die Alkylenoxide vollständig abreagiert sind. Sollte die Mindesttemperatur unterschritten werden, kann die Reaktionsmischung zurück in den Hauptreaktor geführt werden und in Kreislauffahrweise betrieben werden. Eine Korrektur der Fahrweise des Hauptreaktors z.B. durch Absenken der Verweilzeit im Hauptreaktor wäre ebenso möglich. Diese Kreislauffahrweise ist insbesondere von Bedeutung für das Anfahren eines adiabat betriebenen Nachreaktors. Mittels Kreislauffahrweise kann der adiabate Nachreaktor auf die Reaktionstemperatur des Hauptreaktors gebracht werden. Hiermit können Wärmeverluste durch Aufheizen der Reaktorbauteile aus der Reaktionsmischung ausgeglichen werden. Erst wenn der Rohrreaktor ausreichend temperiert ist, wird auf die kontinuierliche Fahrweise umgeschaltet. Der Vorteil dieser Fahrweise ist, dass teure Investitionen für einen Wärmetauscher für die seltenen Anfahrvorgänge eines kontinuierlich betriebenen Rohrreaktors vermieden werden. Weiterhin würde eine installierte Beheizung für die Anfahrvorgänge auch im ausgeschalteten Zustand später im adiabaten Betrieb Nachteile in Form größerer Wärmeverluste bedeuten. Sollte die maximal zulässige Temperatur am Austritt aus dem Rohrreaktor überschritten werden, kann ebenfalls eine Korrektur der Regelung des Hauptreaktors erfolgen, z.B. durch Anheben der Verweilzeit im Hauptreaktor.

In weiterer Ausgestaltung des erfindungsgemäßen Verfahrens kann die Zuführung der Reaktionsmischung aus dem Hauptreaktor in den Rohrreaktor in der Weise erfolgen, dass die Reaktionsmischung am Eingang des Rohrreaktors einen Gehalt an nicht umgesetzten Alkylenoxiden von 1 bis 10 Gew.-% bezogen auf die Reaktionsmischung an dieser Stelle aufweist, insbesondere 2 bis 6 Gew.-%, bevorzugt 3 bis 4 Gew.-%. Dies ist von Vorteil, weil auf diese

Weise dem Rohrreaktor eine bereits größtenteils umgesetzte Reaktionsmischung zugeführt werden kann, die durch geeignete Reaktionsführung im Hauptreaktor nur einen geringen Anteil cyclischer Verbindungen enthält. Insbesondere bei den vorgenannten geringen Stoffmengen an noch nicht abreagierten Ausgangsstoffen kann der Rohrreaktor unter den erfindungsgemäß angegebenen erhöhten Temperaturen betrieben werden, ohne dass es zu einer nennenswerten Erhöhung des Anteils cyclischer Verbindungen kommt.

Bei dem erfindungsgemäß eingesetzten Rohrreaktor handelt es sich beispielsweise um ein beheiztes oder thermoummanteltes Rohr. Als Heizung kann eine elektrische Heizung oder ein mit einem Heizfluid betriebener Heizmantel eingesetzt werden. Optional können Edukte, nachdosiert werden. Insbesondere DMC-Katalysator, ein oder mehrere Alkylenoxide und/ oder Kohlendioxid können dem Rohrreaktor an seiner dem Hauptreaktor zugewandten Öffnung, also seinem Einlass, kontinuierlich zugeführt werden. Das resultierende Produkt, das im wesentlichen aus Polyethercarbonatpolyol besteht, wird dann kontinuierlich am anderen Ende des Rohrreaktors (Auslass) entnommen.

Der Rohrreaktor kann ein Verhältnis von Rohrlänge L zu Rohrinnendurchmesser des Reaktionsrohres $d_R$ von L / $d_R$ 10 bis 100 aufweisen. Im Falle eines adiabaten Nachreaktors bezeichnet $d_R$ den Innendurchmessers des inneren Rohres.

Die Zuführungen zu den Mischern und Vorlagen bzw. zum Hauptreaktor und nachgelagerten Rohrreaktor sind vorzugsweise beheizbar, so dass auch feste bzw. hochviskose H-funktionelle Startersubstanzen verwendet werden können.

Der Rohrreaktor wird bevorzugt aus rostfreiem Stahl hergestellt, aber es ist ebenso möglich, dass auch andere Materialien verwendet werden können, solange das Material hinsichtlich Edukte/Produkte, Drücke usw. kompatibel ist.

Der Rohrreaktor kann entweder aus einem durchgängigen Stück Rohr oder aus mindestens zwei aneinandergefügten Rohren, beispielsweise auch mit unterschiedlichen Eigenschaften, wie unterschiedlichem inneren Durchmesser, aufgebaut sein. Der innere Durchmesser des Rohrreaktors kann über die gesamte Länge gleich oder verschieden sein. Der innere Durchmesser des Rohrreaktors beträgt vorzugsweise von 1,1 mm bis 900 mm. Beispielsweise weist der Rohrreaktor in einem ersten Teilabschnitt, der sich über 20 bis 60% seiner gesamten Länge erstreckt, einen inneren Durchmesser von 1,1 mm bis < 100 mm auf, und über einen stromabwärts auf den ersten Teilabschnitt folgenden zweiten Teilabschnitt, der sich über 80 bis 40 % seiner gesamten Länge erstreckt, einen inneren Durchmesser von 100 mm bis 500 mm, vorzugsweise von 100 mm bis 250 mm.

Der Rohrreaktor kann auch aus mehreren parallel verlaufenden Reaktionsrohren bestehen. Es ist im Allgemeinen vorteilhaft technisch gängige Ausführungsformen wie z. B. Rohrbündelwärmetauscher einzusetzen. Ein wesentlicher Vorteil der parallel angeordneten Rohre ist, dass höhere Strömungsgeschwindigkeiten im Reaktionsrohr erreicht werden können. Letzteres verbessert die Wärmeübertragung, und ist damit eine bevorzugte Bauweise bei einer beheizten Ausführung des Rohrreaktors.

Vorzugsweise werden gemäß des erfindungsgemäßen Verfahrens im Rohrreaktor mittlere Verweilzeiten von 0,5 Minuten bis 6 Stunden, bevorzugt von 1 Minute bis 4 Stunden, besonders bevorzugt 1 Minute bis 60 Minuten eingestellt. Die mittlere Verweilzeit lässt sich aus dem Verhältnis zwischen Volumenstrom und Reaktorvolumen bestimmen, wobei letzteres sich aus dem inneren Durchmesser des Rohres bzw. der Rohre und der Länge des Rohres bzw. der Länge der einzelnen Rohrabschnitte ergibt. Bei zu kurzen Verweilzeiten ist im allgemeinen der Umsatz unvollständig, und eine zu lange Verweilzeit ist im allgemeinen nachteilig in Bezug auf die Raum-Zeit-Ausbeute und macht damit den Prozess weniger rentabel.

Es ist bei der Wahl einer beheizten Ausführung des Rohrreaktors vorteilhaft, den Volumenstrom so einzustellen, dass sich ein turbulentes Strömungsprofil einstellt (Dimensionslose Kennzahl Reynolds größer 2300). Wird der Rohrreaktor adiabat betrieben, sind niedrige Reynoldszahlen, im laminaren oder Übergangsgebiet (< 2300) zu bevorzugen.

Besteht der Rohrreaktor aus mindestens zwei aneinandergefügten Rohren, so ist es möglich, diese auf unterschiedliche Temperaturen einzustellen (beispielsweise durch Beheizen oder Kühlen).

Es ist prinzipiell auch möglich, den Rohrreaktor mit mehreren Zugabestellen entlang seiner Längsausdehnung zu versehen, so dass an verschiedenen Stellen des Reaktors Alkylenoxid oder eine Mischung mehrerer Alkylenoxide und H-funktionelle Startersubstanzen bzw. eine Mischung von H-funktionellen Startersubstanzen zugegeben werden kann. Hierdurch ist es möglich, BlockCopolymere zu erzeugen.

Vorzugsweise kann ein Rohrreaktor mit einem Innendurchmesser von 1,1 mm bis 250 mm ohne Einbauten betrieben werden. Vorzugsweise kann ein Rohrreaktor mit einem Innendurchmesser von > 250 mm bis 500 mm ein oder mehrere statische Mischer enthalten oder eine Kombination von statischen Mischern und Wärmetauscher (beispielsweise Kühlschlangen) enthalten.

In dem erfindungsgemäßen Verfahren können DMC-Katalysatoren ohne vorhergehende Aktivierungsschritte (in An- oder Abwesenheit von Kohlendioxid) eingesetzt werden. Dies hat den Vorteil, dass gegenüber einem Batch- oder Semibatch-Verfahren in Rührkesseln ein vorhergehender, zeit- und kostenintensiver Aktivierungsschritt des DMC-Katalysators entfallen kann. Prinzipiell ist es jedoch auch möglich, in einem vorgelagerten Schritt den DMC-Katalysator zunächst zu aktivieren und dann im erfindungsgemäßen Verfahren einzusetzen. Der vorgelagerte Schritt zur Aktivierung des DMC-Katalysators kann in einem dem Hauptreaktor vorgeschalteten Reaktor erfolgen, der selbst wiederum ein

Rohrreaktor oder ein Rührkessel sein kann.

Als Aktivierung des DMC-Katalysators wird ein Schritt bezeichnet, bei dem eine Teilmenge des Alkylenoxids, gegebenenfalls in Gegenwart von $CO_2$, zum DMC-Katalysator gegeben wird und dann die Zugabe der Alkylenoxidverbindung unterbrochen wird, wobei aufgrund einer folgenden exothermen chemischen Reaktion eine Temperaturspitze ("Hotspot") und/oder ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Abklingen des Hotspots. Im Allgemeinen kann dem Aktivierungsschritt ein Schritt zum Trocknen des DMC-Katalysators und ggf. des Starters durch erhöhte Temperatur und/oder reduziertem Druck vorgelagert sein, wobei dieser Schritt der Trocknung nicht Teil des Aktivierungsschrittes im Sinne der vorliegenden Erfindung ist.

In einer weiteren Ausführungsform handelt es sich um ein Verfahren zur Herstellung von Polyethercarbonatpolyolen durch Anlagerung von einem oder mehreren Alkylenoxiden und Kohlendioxid an eine oder mehrere H-funktionelle Startersubstanzen in Gegenwart mindestens eines DMC-Katalysators, dadurch gekennzeichnet, dass die Anlagerung in einem Hauptreaktor und einem nachgeschalteten Rohrreaktor durchgeführt wird, wobei

(i) der DMC-Katalysator in einer oder mehreren H-funktionellen Startersubstanzen oder cyclischem Propylencarbonat suspendiert wird,
(ii) die Suspension aus (i) mit einem oder mehreren Alkylenoxiden und mit 10 bis 200 bar Kohlendioxid zusammengebracht wird, bevorzugt 15 bis 180 bar, besonders bevorzugt 20 bis 120 bar Kohlendioxid, und
(iii) das aus (ii) resultierende Gemisch in dem Hauptreaktor bei einer Temperatur von 80 bis 150 °C zur Reaktion gebracht wird, bevorzugt 90 bis 135 °C und vorzugsweise bei einem Reaktionsdruck von 10 bis 200 bar, besonders bevorzugt 15 bis 180 bar, ganz besonders bevorzugt 20 bis 120 bar,

wobei im Rohrreaktor insbesondere im Wesentlichen dieselben Drücke eingestellt werden wie im Hauptreaktor.

Bevorzugt werden die Eduktströme jedoch separat in den Hauptreaktor zugeführt und erst darin vermischt und miteinander zur Reaktion gebracht. Bei dieser bevorzugten Variante des erfindungsgemäßen Verfahrens wird also der DMC-Katalysator, die H-funktionelle Startersubstanz, das Alkylenoxid und das Kohlendioxid dem Hauptreaktor direkt zugeführt und darin zur Reaktion gebracht, insbesondere bei einer Temperatur von 90 bis 135 °C und einem Reaktionsdruck von 20 bis 180 bar. Eine besonders bevorzugte Variante ist es, den DMC-Katalysator als Dispersion in der H-funktionellen Startersubstanz, das Alkylenoxid und das Kohlendioxid dem Hauptreaktor direkt zuzuführen.

Unter Reaktionsdruck wird der Druck im Hauptreaktor (Schritt iii) verstanden. Dieser Druck kann beispielsweise dadurch geregelt werden, dass zur Druckerhöhung weiteres Kohlendioxid in den Hauptreaktor eingeführt oder eine Druckerniedrigung über ein Ventil am Hauptreaktor und / oder im nachgelagerten Rohrreaktor bewirkt wird.

Wird der Haupt- und auch der Rohrreaktor bei dem angegebenen Reaktionsdruck betrieben, hat dies den Vorteil, dass die Edukte auch bei erhöhter Temperatur flüssig vorliegen. Zudem bewirkt ein hoher Druck eine höhere Selektivität und einen höheren $CO_2$-Einbau.

In Schritt (ii) kann das Zusammenbringen der einzelnen Komponenten gleichzeitig oder nacheinander, vor der Zugabe zum Hauptreaktor oder im Hauptreaktor erfolgen; unter einem "nacheinander zusammenbringen" der einzelnen Komponenten wird verstanden, dass

(ii-1) die Suspension aus (i) zunächst in einem ersten Mischer mit einem oder mehreren Alkylenoxiden zusammengebracht wird und anschließend in einem zweiten Mischer mit 10 bis 200 bar, bevorzugt 15 bis 180 bar, besonders bevorzugt 20 bis 120 bar Kohlendioxid, oder
(ii-2) die Suspension aus (i) zunächst in einem ersten Mischer mit 10 bis 200 bar, bevorzugt 15 bis 180 bar, besonders bevorzugt 20 bis 120 bar Kohlendioxid zusammengebracht wird und anschließend in einem zweiten Mischer mit einem oder mehreren Alkylenoxiden.

Schritt (ii)) kann bei einer Temperatur von 5 bis 50 °C durchgeführt werden. Dadurch wird erreicht, dass aufgrund der relativ niedrigen Temperatur keine Polymerisation im Mischer einsetzt.

Bei dem Verfahren wird bevorzugt getrockneter (z.B. 50°C bei 100 mbar) DMC-Katalysator als Suspension in einer oder mehreren H-funktionellen Startersubstanzen zugegeben. Typische Konzentrationen des DMC-Katalysators in der Katalysatorsuspension liegen zwischen 0,1 - 50 Gew.-%, bevorzugt 0,1 - 25 Gew.-% und besonders bevorzugt 0,1 - 10 Gew.-% bezogen auf die Katalysatorsuspension aus DMC-Katalysator und H-funktionellen Startersubstanzen. Die Suspension soll auf jeden Fall derart sein, dass sie mit konventionellen Pumpen (z.B. Membranpumpen) förderbar bleibt.

Es ist vorteilhaft, den DMC-Katalysator vor Einsatz auf eine bestimmte Partikelgröße zu mahlen. Als praktikabel haben sich Partikel kleiner 500 $\mu$m erwiesen. Prinzipiell sind kleinere Partikelgrößen noch besser, um Verstopfungen zu vermeiden.

Die erfindungsgemäß erhaltenen Polyethercarbonatpolyole können im allgemeinen eine Funktionalität von

mindestens 1, bevorzugt von 2 bis 8, besonders bevorzugt von 2 bis 6 und ganz besonders bevorzugt von 2 bis 4 aufweisen. Das Molekulargewicht beträgt bevorzugt 400 bis 10000 g/mol und besonders bevorzugt 500 bis 6000 g/mol.

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltrlisopropoxysilan. Vorzugsweise werden als Alkylenoxide Ethylenoxid und/oder Propylenoxid, insbesondere Propylenoxid eingesetzt.

Als geeignete H-funktionelle Startersubstanz können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus Wasser, ein- oder mehrwertige Alkohole, ein- oder mehrwertige Amine, mehrwertige Thiole, Carbonsäuren, Aminoalkohole, Aminocarbonsäuren, Thioalkohole, Hydroxyester, Polyetherpolyole, Polyesterpolyole, Polyesteretherpolyole, Polyethercarbonatpolyole, Polycarbonatpolyole, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF SE), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-l-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-l-butanthiol, 2-Buten-l-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere

aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des Weiteren können als H-funktionelle Startersubstanzen Polycarbonatdiole eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atome pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (II),

$$HO\text{-}(CH_2)_x\text{-}OH \qquad (II)$$

wobei x eine Zahl von 1 bis 20, bevorzugt eine gerade Zahl von 2 bis 20 ist. Beispiele für Alkohole gemäß Formel (II) sind Ethylenglycol, 1,4-Butandiol, 1,6-Hexandiol, 1,8-Octandiol, 1,10 Decandiol und 1,12-Dodecandiol. Sind die Alkohole bei 20 °C fest oder hochviskos, so ist es vorteilhaft, die Zuführungen zum Rohrreaktor zu beheizen. Weitere bevorzugte H-funktionelle Startersubstanzen sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8 Octandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein Molekulargewicht Mn im Bereich von 62 bis 4500 g/mol und eine Funktionalität von 2 bis 3 und insbesondere ein Molekulargewicht Mn im Bereich von 62 bis 3000 g/mol und eine Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Starterverbindung verstanden.

DMC-Katalysatoren sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A

743 093, EP-A 761 708, WO 97/40086, WO 98/16310 und WO 00/47649 beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger), so dass eine Abtrennung des Katalysators aus dem fertigen Produkt gegebenenfalls nicht mehr erforderlich ist. Als DMC-Katalysator wird beispielsweise ein Metallkomplexkatalysator auf Basis der Metalle Zink und Cobalt eingesetzt. Beispielsweise enthalten hochaktive DMC-Katalysatoren eine Doppelmetallcyanid-Verbindung (z.B. Zinkhexacyanocobaltat(III)), einen organischen Komplexliganden (z.B. tert.-Butanol) und Polyetherpolyol mit einem zahlenmittlerem Molekulargewicht größer als 500 g/mol; solche DMC-Katalysatoren sind beispielsweise in EP-A 700 949 beschrieben.

Es ist auch möglich, die in EP Anmeldenummer 10163170.3 offenbarten alkalischen DMC-Katalysatoren einzusetzen.

Zur Herstellung der Doppelmetallcyanid-Verbindungen geeignete cyanidfreie Metallsalze besitzen bevorzugt die allgemeine Formel (III),

$$M(X)_n \qquad (III)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Cyanat, Thiocyanat, Isocyanat, Isothiocyanat oder Nitrat ist,

oder geeignete cyanidfreie Metallsalze besitzen die allgemeine Formel (IV),

$$M_r(X)_3 \qquad (IV)$$

wobei

M ausgewählt ist aus den Metallkationen $Fe^{3+}$, $Al^{3+}$ und $Cr^{3+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalate ist und
r ist 1, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (V),

$$M(X)_s \qquad (V)$$

wobei

M ausgewählt ist aus den Metallkationen $Mo^{4+}$, $V^{4+}$ und $W^{4+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (VI),

$$M(X)_t \qquad (VI)$$

wobei

M ausgewählt ist aus den Metallkationen $Mo^{6+}$ und $W^{6+}$

X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Cyanat, Thiocyanat, Isocyanat, Isothiocyanat, Carboxylat oder Nitrat ist,

Beispiele geeigneter cyanidfreier Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VII)

$$(Y)_aM'(CN)_b(A)_c \qquad (VII)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$, $Cs^+$) und Erdalkalimetall (d.h. $Be^{2+}$, $Ca^{2+}$, $Mg^{2+}$, $Sr^{2+}$, $Ba^{2+}$),
A ausgewählt ist aus einem oder mehreren Anionen der Gruppe bestehend aus Halogeniden (d.h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Kaliumhexacyanocobaltat(III), Kaliumhexacyanoferrat(II), Kali umhexacyanoferrat(III), Calciumhexacyanocobaltat(III) und Lithiumhexacyanocobaltat(III).

Bevorzugte Doppelmetallcyanid-Verbindungen, die in den DMC-Katalysatoren enthalten sind, sind Verbindungen der allgemeinen Formel (VIII)

$$M_x[M'_{x'}(CN)_y]_z \qquad (VIII),$$

worin M wie in Formel (III) bis (VI) und
M' wie in Formel (VII) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanid-Verbindungen sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086 offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol) und Verbindungen, die sowohl aliphatische oder cycloaliphatische Ethergruppen

wie auch aliphatische Hydroxylgruppen enthalten (wie z.B. Ethylenglykol-mono-tert.-butylether, Diethylenglykol-mono-tert.-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-% bezogen auf Metallcyanidsalz, also mindestens ein molares Verhältnis von cyanidfreiem Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, so dass sich eine Suspension bildet, die die Doppelmetallcyanid-Verbindung (z.B. Zinkhexacyanocobaltat), Wasser, überschüssiges cyanidfreies Metallsalz, und den organischen Komplexliganden enthält. Der organische Komplexligand kann dabei in der wässrigen Lösung des cyanidfreien Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des Katalysators) aus der Suspension durch bekannte Techniken, wie Zentrifugation oder Filtration.

In einer bevorzugten Ausführungsvariante zur Herstellung des Katalysators wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und weiterer komplexbildender Komponente.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Reaktionsdruck oder über den Volumenstrom festgelegt werden. Als Reaktionsdruck im Haupt- und Rohrreaktor hat sich der Bereich von 10 bis 200 bar, besonders bevorzugt 15 bis 180 bar, ganz besonders bevorzugt 20 bis 120 bar für die Copolymerisation zur Herstellung der Polyethercarbonatpolyole als vorteilhaft erwiesen. Für das erfindungsgemäße Verfahren hat sich weiterhin gezeigt, dass die Copolymerisation im Hauptreaktor zur Herstellung der Polyethercarbonatpolyole im Hauptreaktor vorteilhafterweise bei 80 bis 150 °C, bevorzugt 90 bis 135 °C durchgeführt wird. Werden Temperaturen unterhalb von 80°C im Hauptreaktor eingestellt, wie beispielsweise 50°C, kommt die Reaktion zum Erliegen. Bei Temperaturen oberhalb von 150°C im Hauptreaktor steigt die Menge an unerwünschten Nebenprodukten stark an. Weiterhin ist es von Vorteil, dass das $CO_2$ bei der Wahl von Druck und Temperatur möglichst im flüssigen und/oder überkritischen Zustand vorliegt.

Ein weiterer Gegenstand der vorliegenden Erfindung betrifft eine Vorrichtung zur Herstellung von Polyethercarbonatpolyolen durch Anlagerung von einem oder mehreren Alkylenoxiden und Kohlendioxid an eine oder mehrere H-funktionellen Startersubstanzen in Gegenwart mindestens eines DMC-Katalysators, umfassend einen Hauptreaktor und einen sich an diesen stromabwärts anschließenden Rohrreaktor als Nachreaktor, wobei die Vorrichtung dadurch gekennzeichnet ist, dass der Rohrreaktor derart ausgestaltet ist, dass an dessen Ausgang eine Temperatur einstellbar ist, die um wenigstens 10 °C oberhalb der Temperatur im Inneren des Hauptreaktors liegt, wobei zur Einstellung der Temperatur am Ausgang des Rohrreaktors diesem eine Heizeinrichtung zugeordnet ist oder der Rohrreaktor mit einer Isolierung versehen ist, so dass dieser einen Wärmedurchgangskoeffizienten k wie vorstehend definiert gemäß VDI-Wärmeatlas, 2013 (DOI 10.1007/978-3-642-19981-3), Abschnitt E1 von höchstens 12 W/($m^2$K) aufweist, insbesondere von höchstens 8 W/($m^2$K). Der Hauptreaktor ist insbesondere als ein kontinuierlich betriebener Rührreaktor ausgestaltet.

Die Vorrichtung kann derart ausgestaltet sein, dass der Rohrreaktor an seinem Ausgang mit einem Thermofühler ausgerüstet ist, wobei der Thermofühler insbesondere zur Steuerung der Heizeinrichtung des Rohrreaktors mit der Heizeinrichtung gekoppelt ist.

Die Erfindung wird im Folgenden anhand der Figuren 1 bis 4 sowie mithilfe von Ausführungsbeispielen näher erläutert. Darin zeigt die

Fig. 1 den schematischen Aufbau einer Versuchsanordnung zur Herstellung von Polyethercarbonatpolyolen,

Fig. 2 eine alternative Versuchsanordnung zur Herstellung von Polyethercarbonatpolyolen,

Fig. 3 eine erste Ausführungsform eines erfindungsgemäßen Rohrreaktors mit Heizung,

Fig. 4 eine zweite Ausführungsform eines erfindungsgemäßen Rohrreaktors mit thermischer Isolierung.

In Fig. 1 ist ein schematischer Aufbau einer Versuchsanordnung zur Herstellung von Polyethercarbonatpolyolen gemäß der vorliegenden Erfindung gezeigt. Darin ist in einem gerührten Vorlagebehälter 1 eine Suspension bestehend aus einer H-funktionellen Startersubstanz sowie gemahlenem und getrocknetem DMC-Katalysator enthalten. In einem weiteren Vorlagebehälter 2 wird Propylenoxid vorgehalten. Die Suspension aus dem Vorlagebehälter 1 und das Propylenoxid aus dem Vorlagebehälter 2 werden jeweils mittels den jeweiligen Vorlagebehältern 1, 2 zugeordneten Pumpen (vorliegend nicht dargestellt) über Rohrleitungen 3 zu einem Mischer 4 gefördert, der als Kaskadenmischer ausgestaltet ist. Als Pumpen kommen vorliegend HPLC-Pumpen zum Einsatz. In dem Kaskadenmischer 4 werden die zugeführten Komponenten bei einer Temperatur von ca. 40 °C gemischt, wobei noch keine Reaktion eintritt.

Diese so erzeugte Mischung wird weiter über eine Rohrleitung 3 einem weiteren Mischer 5 zugeführt, vorliegend ein Kaskadenmischer, in den zugleich Kohlendioxid aus einem Vorlagebehälter 6, vorliegend einer Gasflasche mit Steigrohr, mittels einer Pumpe zugeführt wird. Die Durchmischung erfolgt bei einer Temperatur von ca. 40 °C, wobei ebenfalls noch keine Reaktion eintritt.

Als Mischer 4 und 5 können auch die in der Offenlegungsschrift WO 2007/135154 A1 genannten Mischer eingesetzt werden, insbesondere sogenannte Split-Recombine-Mischer, wie z.B. der "Kaskadenmischer 2S" der Firma Ehrfeld Mikrotechnik BTS GmbH. Ein solcher Split-Recombine-Mischer zeichnet sich durch Stufen aus wiederkehrender Trennung und Zusammenführung von Strömen aus. Bei jeder dieser Stufen wird die Lamellenzahl sukzessive verdoppelt und dadurch Lamellendicke und Diffusionsweg halbiert. Die Vermischung kann anstelle dessen auch durch einen herkömmlichen Statikmischer, mittels Düsen sowie über Mischer mit bewegten, rotierenden Einbauten erfolgen.

Aus dem Kaskadenmischer 5 wird die Reaktionsmischung über eine weitere Rohrleitung 3 in einen mit einem Rührer 7 ausgestatteten Hauptreaktor 8 eingefüllt, der mit einer Heizung ausgerüstet ist. Der Hauptreaktor 8 ist als Druckreaktor ausgelegt, in dem die Mischung bei 105 °C und einem Druck von 50 bar zur Reaktion gebracht wird.

Sobald die im Druckreaktor 8 enthaltene Reaktionsmischung 9 einen Umsetzungsgrad erreicht hat, bei dem die Reaktionsmischung 9 einen Rest-Propylenoxidgehalt von etwa 3 bis 4 Gew.-% bezogen auf die Reaktionsmischung 9 aufweist, wird die Reaktionsmischung 9 über einen Vorproduktauslass 10 über eine Rohrleitung 3 einem Nachreaktor 11 zugeführt, der vorliegend als Rohrreaktor ausgestaltet ist. Der Rohrreaktor 11 besitzt einen Eingang 19, einen mittels eines Heizfluids temperierbaren Heizmantel 12 sowie einen Ausgang 13. Durch den Heizmantel 12 wird der Rohrreaktor 11 in der Weise aufgeheizt, dass die durch ihn in Pfeilrichtung hindurchfließende Reaktionsmischung 9 am Ausgang 13 des Rohrreaktors 11 eine Temperatur von 125 °C aufweist, also etwa 20 °C oberhalb der Temperatur des Druckreaktors 8.

Das den Rohrreaktor 11 an seinem Ausgang 13 verlassende Polyethercarbonatpolyol enthält praktisch kein freies Propylenoxid mehr und besitzt nur einen sehr geringen zusätzlichen Anteil des zyklischen Propylencarbonats gegenüber der Reaktionsmischung 9 am Vorproduktauslass 10.

Fig. 2 zeigt schematisch eine bevorzugte Ausgestaltung einer Versuchsanordnung zur Herstellung von Polyethercarbonatpolyolen gemäß der vorliegenden Erfindung. Der Aufbau unterscheidet sich dabei von dem in Fig. 1 dargestellten dadurch, dass die Vorlagebehälter 1, 2, 6 direkt über Rohrleitungen 3 mit dem Druckreaktor 8 verbunden

sind, sodass eine Durchmischung der Edukte erst im Druckreaktor 8 erfolgt.

In Fig. 3 ist der in Fig. 1 und Fig. 2 verwendete Rohrreaktor 11 in vergrößerter Darstellung abgebildet. Darin ist zu erkennen, dass der Heizmantel 12 einen Zulauf 14 und einen Ablauf 15 für ein Heizfluid besitzt, welches den Heizmantel 12 in der durch Pfeile angedeuteten Richtung durchströmt und dabei die den Rohrreaktor 11 in ebenfalls mit Pfeilen angedeuteter Richtung durchströmende Reaktionsmischung 9 auf die gewünschte Temperatur, gemessen am Ausgang 13, erwärmt.

Bei dieser Ausführungsform des Rohrreaktors 11 wird die gewünschte Temperatur am Ausgang 13 des Rohrreaktors 11 zum Teil durch die mittels des Heizmantels 12 zugeführte Wärme und zum anderen Teil durch die bei der chemischen Umsetzung der Reaktionsmischung 9 freiwerdende thermische Energie eingestellt. Zur Kontrolle der gewünschten Temperatur am Ausgang 13 des Rohrreaktors 11 ist dieser an seinem Ausgang 13 mit einem Temperaturfühler 16 ausgestattet. Der Temperaturfühler 16 ist wiederum an eine vorliegend nicht dargestellte Steuerungseinrichtung angeschlossen, die die Durchflussgeschwindigkeit und / oder die Temperatur des den Heizmantel 12 durchströmenden Heizfluids regelt.

In Fig. 4 ist eine alternative Ausgestaltung eines Rohrreaktors 17 abgebildet, der bei einem Aufbau gemäß Fig. 1 und Fig. 2 anstelle des beheizten Rohrreaktors 11 verwendet werden kann. Der Rohrreaktor 17 hat im Wesentlichen denselben Aufbau wie der Rohrreaktor 11, ist allerdings im Unterschied zu letzterem mit einem thermisch isolierenden Mantel 18 anstelle einer Heizeinrichtung versehen, der das Reaktionsrohr des Rohrreaktors 17 umschließt. Die Erwärmung der den Rohrreaktor 17 in der mit Pfeilen angedeuteter Richtung durchfließenden Reaktionsmischung 9 wird bei dieser Ausführungsform ausschließlich durch die bei der Nachreaktion der Reaktionsmischung 9 im Rohrreaktor 17 freiwerdende Reaktionswärme erreicht. Der thermisch isolierende Mantel 18 ist vorliegend als konzentrisches Doppelrohr mit einem Innenrohr 18a, einem Außenrohr 18b und einer auf dem Außenrohr 18b aufgebrachten Isolierschicht 18c ausgestaltet. Der Zwischenraum zwischen dem Innenrohr 18a und dem Außenrohr 18b ist evakuiert, so dass der Rohrreaktor 17 in den isolierten Bereichen einen Wärmedurchgangkoeffizienten k gemäß VDI-Wärmeatlas, 2013 (DOI 10.1007/978-3-642-19981-3), Abschnitt EI, S.721ff von 1,0 $W/m^2K$ aufweist.

Nach der Durchführung des erfindungsgemäßen Verfahrens zur Herstellung des Polyethercarbonatpolyols enthält das resultierende Reaktionsgemisch den DMC-Katalysator in der Regel in Form feiner dispergierter Feststoffpartikel. Daher kann es wünschenswert sein, den DMC-Katalysator möglichst vollständig aus dem resultierenden Reaktionsgemisch zu entfernen. Die Abtrennung des DMC-Katalysators hat einerseits den Vorteil, dass das resultierende Polyethercarbonatpolyol industrie- oder zertifzierungsrelevante Grenzwerte beispielsweise bzgl. Metallgehalten oder bzgl. bei einem Verbleib aktivierten Katalysators im Produkt andernfalls resultierenden Emissionen erfüllt und andererseits dient es der Rückgewinnung des DMC-Katalysators.

Der DMC-Katalysator kann mit Hilfe verschiedener Methoden weitestgehend oder vollständig entfernt werden: Der DMC Katalysator kann zum Beispiel mit Hilfe der Membranfiltration (Nano-, Ultra oder Querstromfiltration), mit Hilfe der Kuchenfiltration, mit Hilfe der Pre-Coat Filtration oder mittels Zentrifugation vom Polyethercarbonatpolyol abgetrennt werden.

Vorzugsweise wird zur Abtrennung des DMC-Katalysators ein mehrstufiges Verfahren bestehend aus mindestens zwei Schritten angewendet.

Beispielsweise wird in einem ersten Schritt das zu filtrierende Reaktionsgemisch in einem ersten Filtrationsschritt in einen größeren Teilstrom (Filtrat), bei dem ein Großteil des Katalysators oder der gesamte Katalysator abgetrennt wurde, und einen kleineren Reststrom (Retentat), der den abgetrennten Katalysator enthält, aufgeteilt. In einem zweiten Schritt wird dann der Reststrom einer Dead-End Filtration unterzogen. Hieraus wird ein weiterer Filtratstrom, bei dem ein Großteil des Katalysators oder der gesamte Katalysator abgetrennt wurde, sowie ein feuchter bis weitestgehend trockener Katalysatorrückstand gewonnen.

Alternativ kann der im Polyethercarbonatpolyol enthaltene Katalysator aber auch in einem ersten Schritt einer Adsorption, Agglomeration/Koagulation und/oder Flokkulation unterzogen werden, auf die in einem zweiten oder mehreren nachfolgenden Schritten die Abtrennung der Feststoffphase von dem Polyethercarbonatpolyol folgt. Geeignete Adsorbentien zur mechanisch-physikalischen und/oder chemischen Adsorption umfassen unter anderem aktivierte oder nichtaktivierte Tonerden bzw. Bleicherden (Sepiolite, Montmorillonite, Talk etc.), synthetische Silikate, Aktivkohle, Kieselerden/Kieselgure und aktivierte Kieselerden/Kieselgure in typischen Mengenbereichen von 0,1 Gew% bis 2 Gew%, bevorzugt 0,8 Gew% bis 1,2 Gew% bezogen auf das Polyethercarbonatpolyol bei Temperaturen von 60°C bis 140°C bevorzugt 90°C bis 110°C und Verweilzeiten von 20 min bis 100 min, bevorzugt 40 min bis 80 min, wobei der Adsorptionsschritt inklusive des Einmischens des Adsorbens batchweise oder kontinuierlich durchgeführt werden kann.

Ein bevorzugtes Verfahren zur Abtrennung dieser Feststoffphase (bestehend z.B. aus Adsorbens und DMC Katalysator) von dem Polyethercarbonatpolyol stellt die Pre-Coat Filtration dar. Hierbei wird die Filteroberfläche abhängig vom Filtrationsverhalten, welches von Teilchengrößenverteilung der abzutrennenden Feststoffphase, mittlerem spezifischem Widerstand des resultierenden Filterkuchens sowie dem Gesamtwiderstand von Pre-Coat-Schicht und Filterkuchen bestimmt wird, mit einem permeablen/durchlässigen Filtrationshilfsmittel (z.B. anorganisch: Celite, Perlite; organisch: Zellulose) mit einer Schichtdicke von 20 mm bis 250 mm bevorzugt 100 mm bis 200 mm beschichtet ("Pre-Coat"). Die Abtrennung der Mehrheit der Feststoffphase (bestehend z.B. aus Adsorbens und DMC Katalysator) erfolgt dabei an der Oberfläche der Pre-Coat Schicht in Kombination mit einer Tiefenfiltration der kleineren Teilchen innerhalb der Pre-Coat Schicht-. Die Temperatur des zu filtrierenden Rohprodukts liegt dabei im Bereich 50°C bis 120°C, bevorzugt, 70°C bis 100°C.

Um einen ausreichenden Produktstrom durch die Pre-Coat Schicht und die darauf aufwachsende Kuchenschicht zu gewährleisten, können die Kuchenschicht sowie ein geringer Teil der Pre-Coat Schicht (periodisch oder kontinuierlich) mittels eines Schabers oder Messers abgetragen und aus dem Prozess entfernt werden. Die Verstellung des Schabers bzw. Messers erfolgt dabei mit minimalen Vorschub-Geschwindigkeiten von ca. 20 μm/min - 500 μm/min, bevorzugt im Bereich 50 μm/min - 150 μm/min.

Sobald die Pre-Coat Schicht durch diesen Prozess weitestgehend oder vollständig abgetragen wurde, wird die Filtration angehalten und eine neue Pre-Coat Schicht auf die Filterfläche aufgezogen. Hierbei kann das Filterhilfsmittel beispielsweise in zyklischem Propylencarbonat suspendiert sein. Typischerweise wird diese Pre-Coat Filtration in Vakuum-Trommel-Filtern durchgeführt. Um im Fall eines viskosen Feedstroms technisch relevante Filtratdurchsätze im Bereich von 0,1 $m^3/(m^2 \cdot h)$ bis 5 $m^3/(m^2 \cdot h)$zu realisieren, kann das Trommel-Filter auch als Druck-Trommel-Filter mit Druckdifferenzen von bis zu 6 bar und mehr zwischen dem zu filtrierenden Medium und der Filtratseite ausgeführt werden.

Grundsätzlich kann die Abtrennung des DMC-Katalysators aus dem resultierenden Reaktionsgemisch des erfindungsgemäßen Verfahrens sowohl vor Entfernung von flüchtigen Bestandteilen (wie z.B. zyklischem Propylencarbonat) als auch nach der Abtrennung von flüchtigen Bestandteilen erfolgen.

Ferner kann die Abtrennung des DMC-Katalysators aus dem resultierenden Reaktionsgemisch des erfindungsgemäßen Verfahrens mit oder ohne den weiteren Zusatz eines Lösungsmittels (insbesondere zyklischem Propylencarbonat) zwecks Absenkung der Viskosität vor oder während der einzelnen, beschriebenen Schritte der Katalysatorabtrennung durchgeführt werden.

In einer ersten Ausführungsform betrifft die Erfindung somit ein Verfahren zur Herstellung von Polyethercarbonatpolyolen durch Anlagerung von einem oder mehreren Alkylenoxiden und Kohlendioxid an eine oder mehrere H-funktionellen Startersubstanzen in Gegenwart mindestens eines DMC-Katalysators, bei dem die Reaktion in einem Hauptreaktor (8) und einem sich an diesen stromabwärts anschließenden Rohrreaktor (11, 17) als Nachreaktor durchgeführt wird, dadurch gekennzeichnet, dass am Ausgang (13) des Rohrreaktors (11, 17) eine Temperatur eingestellt wird, die um wenigstens 10 °C oberhalb der Temperatur im Inneren des Hauptreaktors (8) liegt.

In einer zweiten Ausführungsform betrifft die Erfindung ein Verfahren gemäß der ersten Ausführungsform, dadurch gekennzeichnet, dass am Ausgang (13) des Rohrreaktors (11, 17) eine Temperatur eingestellt wird, die 10 °C bis 40 °C oberhalb der Temperatur im Inneren des Hauptreaktors (8) liegt, insbesondere 15 bis 35 °C.

In einer dritten Ausführungsform betrifft die Erfindung ein Verfahren gemäß der ersten oder zweiten Ausführungsform, dadurch gekennzeichnet, dass am Ausgang (13) des Rohrreaktors (11, 17) die Temperatur derart eingestellt wird, dass diese pro Gew.-% an nicht abreagiertem Alkylenoxid gemessen am Eingang (19) des Rohrreaktors (11, 17) 2,5 bis 12 °C oberhalb der Temperatur im Inneren des Hauptreaktors (8) liegt, insbesondere 3 bis 7 °C pro Gew.-% an nicht abreagiertem Alkylenoxid.

In einer vierten Ausführungsform betrifft die Erfindung ein Verfahren gemäß einer der Ausführungsformen 1 bis 3, dadurch gekennzeichnet, dass die Einstellung der Temperatur am Ausgang (13) des Rohrreaktors (11, 17) durch eine Heizeinrichtung (12) erfolgt, die dem Rohrreaktor (11, 17) zugeordnet ist oder durch eine Isolierung (18) des Rohrreaktors (11, 17).

In einer fünften Ausführungsform betrifft die Erfindung ein Verfahren gemäß einer der Ausführungsformen 1 bis 4, dadurch gekennzeichnet, dass die Zuführung der Reaktionsmischung (9) aus dem Hauptreaktor (8) in den Rohrreaktor (11, 17) in der Weise erfolgt, dass die Reaktionsmischung (9) am Eingang (19) des Rohrreaktors (11, 17) einen Gehalt an nicht umgesetzten Alkylenoxiden von 1 bis 10 Gew.-% bezogen auf die Reaktionsmischung (9) aufweist, insbesondere 2 bis 6 Gew.-%, bevorzugt 3 bis 4 Gew.-%.

In einer sechsten Ausführungsform betrifft die Erfindung ein Verfahren gemäß einer der Ausführungsformen 1 bis 5, dadurch gekennzeichnet, dass

(i) der DMC-Katalysator in einer oder mehreren H-funktionellen Startersubstanzen suspendiert wird,
(ii) die Suspension aus (i) mit einem oder mehreren Alkylenoxiden und mit 10 bis 200 bar Kohlendioxid zusammengebracht wird, insbesondere 15 bis 180 bar und
(iii) das aus (ii) resultierende Gemisch in dem Hauptreaktor (8) bei einer Temperatur von 80 bis 150 °C zur Reaktion gebracht wird,

wobei im Rohreaktor (11, 17) insbesondere im Wesentlichen dieselben Drücke eingestellt werden wie im Hauptreaktor (8), wobei vorzugsweise

(ii-1) die Suspension aus (i) zunächst in einem ersten Mischer (4) mit einem oder mehreren Alkylenoxiden und

anschließend in einem zweiten Mischer (5) mit 10 bis 200 bar Kohlendioxid zusammengebracht wird, oder

(ii-2) die Suspension aus (i) zunächst in einem ersten Mischer mit 10 bis 200 bar Kohlendioxid und anschließend in einem zweiten Mischer mit einem oder mehreren Alkylenoxiden zusammengebracht wird.

In einer siebten Ausführungsform betrifft die Erfindung ein Verfahren gemäß einer der Ausführungsformen 1 bis 5, dadurch gekennzeichnet, dass der DMC-Katalysator, die H-funktionelle Startersubstanz, das Alkylenoxid und das Kohlendioxid dem Hauptreaktor (8) direkt zugeführt und darin zur Reaktion gebracht werden, insbesondere bei einer Temperatur von 90 bis 135 °C und einem Reaktionsdruck von 20 bis 180 bar, wobei der DMC-Katalysator vorzugsweise als Dispersion in der H-funktionellen Startersubstanz, das Alkylenoxid und das Kohlendioxid dem Hauptreaktor (8) direkt zugeführt werden.

In einer achten Ausführungsform betrifft die Erfindung ein Verfahren gemäß einer der Ausführungsformen 1 bis 7, dadurch gekennzeichnet, dass der innere Durchmesser des Rohrreaktors (11, 17) wenigstens Abschnittsweise oder über seine gesamte Länge 1,1 mm bis 900 mm beträgt.

In einer neunten Ausführungsform betrifft die Erfindung ein Verfahren gemäß einer der Ausführungsformen 1 bis 8, dadurch gekennzeichnet, dass der Rohrreaktor (11, 17) aus einem durchgängigen Stück Rohr oder aus mindestens zwei in Strömungsrichtung aufeinanderfolgenden Rohren aufgebaut ist.

In einer zehnten Ausführungsform betrifft die Erfindung ein Verfahren gemäß einer der Ausführungsformen 1 bis 9, dadurch gekennzeichnet, dass der Rohrreaktor (11, 17) in einem ersten Teilabschnitt, der sich über 20 bis 60% seiner gesamten Länge erstreckt, einen inneren Durchmesser von 1,1 mm bis < 100 mm aufweist, und über einen stromabwärts auf den ersten Teilabschnitt folgenden zweiten Teilabschnitt, der sich über 80 bis 40 % seiner gesamten Länge erstreckt, einen inneren Durchmesser von 100 mm bis 500 mm.

In einer elften Ausführungsform betrifft die Erfindung ein Verfahren gemäß einer der Ausführungsformen 1 bis 10, dadurch gekennzeichnet, dass der Rohrreaktor (11, 17) ein Verhältnis von Rohrlänge L zu Rohrinnendurchmesser $d_R$ von $L / d_R > 50$ aufweist.

In einer zwölften Ausführungsform betrifft die Erfindung ein Verfahren gemäß einer der Ausführungsformen 1 bis 11, dadurch gekennzeichnet, dass der Hauptreaktor (8) ein kontinuierlich betriebener Rührreaktor ist.

In einer dreizehnten Ausführungsform betrifft die Erfindung ein Verfahren gemäß einer der Ausführungsformen 1 bis 12, dadurch gekennzeichnet, dass die H- funktionelle Startersubstanz ausgewählt ist aus mindestens einer der Gruppe bestehend aus Polyetherpolyol, Polyesterpolyol, Polyethercarbonatpolyol, Wasser, Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, 3-Methyl-1,5-pentandiol, 1,6-Hexandiol; 1,8-Octandiol, 1,10-Decandiol, 1,12-Dodecandiol, 1,4-Bis-(hydroxymethyl)cyclohexan, Triethylenglykol, Tetraethylenglykol, Dipropylenglykol, Tripropylenglykol, Dibutylenglykol Trimethylolpropan, Glycerin, Trishydroxyethylisocyanurat, Rizinusöl, Pentaerythrit, Sorbit, Hexit, Saccharose, Stärke, Stärkehydrolysat, Cellulose, Cellulosehydrolysat, hydroxyfunktionalisierte Fette und hydroxyfunktionalisierte Öle.

In einer vierzehnten Ausführungsform betrifft die Erfindung eine Vorrichtung zur Herstellung von Polyethercarbonatpolyolen durch Anlagerung von einem oder mehreren Alkylenoxiden und Kohlendioxid an eine oder mehrere H-funktionellen Startersubstanzen in Gegenwart mindestens eines DMC-Katalysators, umfassend einen Hauptreaktor (8) und einen sich an diesen stromabwärts anschließenden Rohrreaktor (11, 17) als Nachreaktor, dadurch gekennzeichnet, dass der Rohrreaktor (11, 17) derart ausgestaltet ist, dass an dessen Ausgang (13) eine Temperatur einstellbar ist, die um wenigstens 10 °C oberhalb der Temperatur im Inneren des Hauptreaktors (8) liegt, wobei zur Einstellung der Temperatur am Ausgang (13) des Rohrreaktors (11, 17) diesem eine Heizeinrichtung (12) zugeordnet ist oder der Rohrreaktor (11, 17) mit einer Isolierung (18) versehen ist, so dass dieser einen Wärmeverlust gemäß VDI-Wärmeatlas, 2013 (DOI 10.1007/978-3-642-19981-3), Abschnitt E1 von höchstens 12 $W/m^2K$ aufweist, insbesondere von höchstens 8 $W/m^2K$.

In einer fünfzehnten Ausführungsform betrifft die Erfindung eine Vorrichtung gemäß der vierzehnten Ausführungsform, dadurch gekennzeichnet, dass der Rohrreaktor (11, 17) an seinem Ausgang (13) mit einem Thermofühler (16) ausgerüstet ist, wobei der Thermofühler (16) insbesondere zur Steuerung der Heizeinrichtung (12) des Rohrreaktors (11, 17) mit der Heizeinrichtung (12) gekoppelt ist.

In einer sechzehnten Ausführungsform betrifft die Erfindung ein Verfahren zur Herstellung von Polyethercarbonatpolyolen durch Anlagerung von einem oder mehreren Alkylenoxiden und Kohlendioxid an eine oder mehrere H-funktionellen Startersubstanzen in Gegenwart mindestens eines Metallkomplexkatalysator auf Basis der Metalle Zink und/oder Cobalt, bei dem die Reaktion in einem Hauptreaktor (8) und einem sich an diesen stromabwärts anschließenden Rohrreaktor (11, 17) als Nachreaktor durchgeführt wird, dadurch gekennzeichnet, dass am Ausgang (13) des Rohrreaktors (11, 17) eine Temperatur eingestellt wird, die um wenigstens 10 °C oberhalb der Temperatur im Inneren des Hauptreaktors (8) liegt

Die nach dem erfindungsgemäßen Verfahren erhältlichen Polyethercarbonatpolyole können problemlos verarbeitet werden, insbesondere durch Umsetzung mit Di- und/oder Polyisocyanaten zu Polyurethanen, insbesondere zu Polyurethan-Weichschaumstoffen (wie beispielsweise Polyurethan-Weichblockschaumstoffen und Polyurethan-Weichformschaumstoffen), Polyurethan-Elastomeren, Polyurethan-Thermoplasten, Polyurethan-Hartschaumstoffen, zu Polyurethan basierten Lackrohstoffen und zu Polyurethan-basierten Beschichtungen. Für Polyurethananwendungen werden vorzugsweise Polyethercarbonatpolyole eingesetzt, die auf einer H-funktionellen Startersubstanz basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

**Beispiele:**

Die OH-Zahl wurde gemäß der Vorschrift der DIN 53240 bestimmt. Die Angabe der Einheit in "mg/g" bezieht sich auf mg[KOH]/g[Polyethercarbonatpolyol].

Der Anteil an eingebautem $CO_2$, im resultierenden Polyethercarbonatpolyol sowie das Verhältnis von Propylencarbonat (cyclisches Carbonat) zu Polyethercarbonatpolyol wurden mittels $^1$H-NMR (Firma Bruker, DPX 400, 400 MHz; Pulsprogramm zg30, Wartezeit dl: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

Cyclisches Carbonat (welches als Nebenprodukt gebildet wurde) Resonanz bei 4,5 ppm, lineares Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm, das ggf. als Startermolekül eingebaute 1,8 Octandiol mit einer Resonanz bei 1,6 bis 1,52 ppm.

Der Molenanteil des im Polymer eingebauten Carbonats in der Reaktionsmischung wird nach Formel (IX) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für ggf. eingesetztes 1,8 Octandiol (Starter)

Unter Berücksichtigung der relativen Intensitäten wurde gemäß der folgenden Formel (IX) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \qquad (IX)$$

Der Gewichtsanteil (in Gew.-%) polymer-gebundenen Carbonats (LC') in der Reaktionsmischung wurde nach Formel (X) berechnet,

$$LC' = \frac{[F(5{,}1-4{,}8) - F(4{,}5)] * 102}{N} * 100\% \qquad (X)$$

wobei sich der Wert für N ("Nenner" N) nach Formel (XI) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \qquad (XI)$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des ggf. eingesetzten Starters 1,8-Octandiol.

Der Gewichtsanteil (in Gew.-%) an cyclischem Carbonat (CC') in der Reaktionsmischung wurde nach Formel (XII) berechnet,

$$CC' = \frac{F(4{,}5) * 102}{N} * 100\% \qquad \text{(XII)}$$

wobei sich der Wert für N nach Formel (XI) berechnet.

Um aus den Werten der Zusammensetzung der Reaktionsmischung die Zusammensetzung bezogen auf den Polymer-Anteil (bestehend aus Polyetherpolyol, welches aus Starter aufgebaut wurde, und Polyethercarbonatpolyol, aufgebaut aus Starter, Propylenoxid und Kohlendioxid während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele) ist normiert auf den Anteil des Polyethercarbonatpolyol-Moleküls, das nicht aus dem Starter besteht.

Eingesetzte Rohstoffe:

| | |
|---|---|
| Polyethercarbonatpolyol: | Polyethercarbonatpolyol mit einer OH-Funktionalität = 2,8, einer OH-Zahl = 56 mg KOH/g und einem $CO_2$-Gehalt = 21 Gew.-%) |
| DMC-Katalysator: | Ein getrockneter und gemahlener DMC-Katalysator (Doppelmetallcyanid-Katalysator), hergestellt gemäß Beispiel 6 von WO 2001/80994-A1 |
| Glycerin: | Fa. Sigma Aldrich |
| Propylenglykol: | Fa. Sigma Aldrich |

Beispiel 1 (Vergleich):

In einen kontinuierlich betriebenen 60 L Druckreaktor mit Gasdosierungseinrichtung und Produktaustragsrohr wurden 32,9 L eines Polyethercarbonatpolyols (OH-Funktionalität = 2,8; OH-Zahl = 56 mg KOH/g; $CO_2$-Gehalt = 21 Gew.-%) enthaltend 200 ppm DMC-Katalysators vorgelegt.

Bei einer Temperatur von 107°C und einem Druck von 74 bar (absolut) wurden unter Rühren (7 Hz) folgende Komponenten mit den angegebenen Dosierraten dosiert:

- Propylenoxid mit 6,4 kg/h
- Kohlendioxid mit 2,4 kg/h
- Mischung aus Glycerin/Propylenglykol (85 Gew.-% / 15 Gew.-%) enthaltend 0,66 Gew.-% DMC-Katalysator (nicht aktiviert) und 170 ppm (bezogen auf die Startermischung) $H_3PO_4$ (in Form einer 85%-igen wässrigen Lösung) mit 0,26 kg/h.

Die Reaktionsmischung wurde über das Produktaustragsrohr kontinuierlich aus dem Druckreaktor entnommen, so dass das Reaktionsvolumen (32,9 L) konstant gehalten wurde. Zur Vervollständigung der Reaktion wurde das Reaktionsgemisch in einen auf 105°C temperierten Nachreaktor (Rohrreaktor mit Reaktionsvolumen 2,0 L) überführt. Das Produkt wurde anschließend in einem Rührkessel (Volumen 350 L) entspannt. Abschließend wurden leichtflüchtige Bestandteile durch Dünnschichtverdampfung bei einer Temperatur von 140 °C und einem Druck von 1 mbar (absolut) mit einer Dosierrate von ca. 9 kg / h abgetrennt.

Beispiel 2 (erfindungsgemäß) :

Die Durchführung erfolgte gemäß Beispiel 1 (Vergleich), wobei die Temperatur des temperierten Nachreaktors 120 °C betrug.

Beispiel 3 (erfindungsgemäß):

Die Durchführung erfolgte gemäß Beispiel 1 (Vergleich), wobei die Temperatur des temperierten Nachreaktors 130 °C betrug.

Beispiel 4 (erfindungsgemäß):

Die Durchführung erfolgte gemäß Beispiel 1 (Vergleich), wobei die Temperatur des temperierten Nachreaktors 140 °C betrug.

Anschließend wurden der Gehalt an eingebautem Kohlendioxid, das Verhältnis cyclischer zu linearer Carbonate und die OH-Zahl der erhaltenen Polyethercarbonatpolyole gemäß den Versuchen 1 bis 4 bestimmt. Die Ergebnisse sind in der folgenden Tabelle 1 zusammengestellt:

Tabelle 1:

| | Bsp. 1 (Vgl.) | Bsp. 2 (Erf.) | Bsp. 3 (Erf.) | Bsp. 4 (Erf.) |
|---|---|---|---|---|
| Temperatur Nachreaktor [°C] | 105 | 120 | 130 | 140 |
| Verhältnis cyclische/lineare Carbonate | 0,177 | 0,170 | 0,172 | 0,179 |
| $CO_2$-Gehalt [Gew.-%] | 20,0 | 20,0 | 19,7 | 19,6 |
| OH-Zahl [mg KOH/g] | 56,6 | 55,9 | 56,4 | 56,7 |

Danach ist zu erkennen, dass bei den erfindungsgemäßen Beispielen 2 bis 4 trotz der deutlich erhöhten Reaktionstemperatur keine signifikante Veränderung der Produkteigenschaften feststellbar ist. Dies betrifft insbesondere die nahezu unveränderte Selektivität, die über das Verhältnis von cyclischem zu linearem Carbonat ausgedrückt ist.

## Patentansprüche

1. Verfahren zur Herstellung von Polyethercarbonatpolyolen durch Anlagerung von einem oder mehreren Alkylenoxiden und Kohlendioxid an eine oder mehrere H-funktionellen Startersubstanzen in Gegenwart mindestens eines DMC-Katalysators, bei dem die Reaktion in einem Hauptreaktor (8) und einem sich an diesen stromabwärts anschließenden Rohrreaktor (11, 17) als Nachreaktor durchgeführt wird, **dadurch gekennzeichnet, dass** am Ausgang (13) des Rohrreaktors (11, 17) eine Temperatur eingestellt wird, die um wenigstens 10 °C oberhalb der Temperatur im Inneren des Hauptreaktors (8) liegt.

2. Verfahren nach Anspruch 1, **dadurch gekennzeichnet, dass** am Ausgang (13) des Rohrreaktors (11, 17) eine Temperatur eingestellt wird, die 10 °C bis 40 °C oberhalb der Temperatur im Inneren des Hauptreaktors (8) liegt, insbesondere 15 bis 35 °C.

3. Verfahren nach Anspruch 1 oder 2, **dadurch gekennzeichnet, dass** am Ausgang (13) des Rohrreaktors (11, 17) die Temperatur derart eingestellt wird, dass diese pro Gew.-% an nicht abreagiertem Alkylenoxid gemessen am Eingang (19) des Rohrreaktors (11, 17) 2,5 bis 12 °C oberhalb der Temperatur im Inneren des Hauptreaktors (8) liegt, insbesondere 3 bis 7 °C pro Gew.-% an nicht abreagiertem Alkylenoxid.

4. Verfahren nach einem der vorstehenden Ansprüche, **dadurch gekennzeichnet, dass** die Einstellung der Temperatur am Ausgang (13) des Rohrreaktors (11, 17) durch eine Heizeinrichtung (12) erfolgt, die dem Rohrreaktor (11, 17) zugeordnet ist oder durch eine Isolierung (18) des Rohrreaktors (11, 17).

5. Verfahren nach einem der vorstehenden Ansprüche, **dadurch gekennzeichnet, dass** die Zuführung der Reaktionsmischung (9) aus dem Hauptreaktor (8) in den Rohrreaktor (11, 17) in der Weise erfolgt, dass die Reaktionsmischung (9) am Eingang (19) des Rohrreaktors (11, 17) einen Gehalt an nicht umgesetzten Alkylenoxiden von 1 bis 10 Gew.-% bezogen auf die Reaktionsmischung (9) aufweist, insbesondere 2 bis 6 Gew.-%, bevorzugt 3 bis 4 Gew.-%.

6. Verfahren nach einem der vorstehenden Ansprüche, **dadurch gekennzeichnet, dass**

    (i) der DMC-Katalysator in einer oder mehreren H-funktionellen Startersubstanzen suspendiert wird,
    (ii) die Suspension aus (i) mit einem oder mehreren Alkylenoxiden und mit 10 bis 200 bar Kohlendioxid zusammengebracht wird, insbesondere 15 bis 180 bar und
    (iii) das aus (ii) resultierende Gemisch in dem Hauptreaktor (8) bei einer Temperatur von 80 bis 150 °C zur Reaktion gebracht wird,

wobei im Rohreaktor (11, 17) insbesondere im Wesentlichen dieselben Drücke eingestellt werden wie im Hauptreaktor (8), wobei vorzugsweise (ii-1

) die Suspension aus (i) zunächst in einem ersten Mischer (4) mit einem oder mehreren Alkylenoxiden und anschließend in einem zweiten Mischer (5) mit 10 bis 200 bar Kohlendioxid zusammengebracht wird, oder (ii-2) die Suspension aus (i) zunächst in einem ersten Mischer mit 10 bis 200 bar Kohlendioxid und anschließend in einem zweiten Mischer mit einem oder mehreren Alkylenoxiden zusammengebracht wird.

7. Verfahren nach einem der Ansprüche 1 bis 5, **dadurch gekennzeichnet, dass** der DMC-Katalysator, die H-funktionelle Startersubstanz, das Alkylenoxid und das Kohlendioxid dem Hauptreaktor (8) direkt zugeführt und darin zur Reaktion gebracht werden, insbesondere bei einer Temperatur von 90 bis 135 °C und einem Reaktionsdruck von 20 bis 180 bar, wobei der DMC-Katalysator vorzugsweise als Dispersion in der H-funktionellen Startersubstanz, das Alkylenoxid und das Kohlendioxid dem Hauptreaktor (8) direkt zugeführt werden.

8. Verfahren nach einem der vorstehenden Ansprüche, **dadurch gekennzeichnet, dass** der innere Durchmesser des Rohrreaktors (11, 17) wenigstens Abschnittsweise oder über seine gesamte Länge 1,1 mm bis 900 mm beträgt.

9. Verfahren nach einem der vorstehenden Ansprüche, **dadurch gekennzeichnet, dass** der Rohrreaktor (11, 17) aus einem durchgängigen Stück Rohr oder aus mindestens zwei in Strömungsrichtung aufeinanderfolgenden Rohren aufgebaut ist.

10. Verfahren nach einem der vorstehenden Ansprüche, **dadurch gekennzeichnet, dass** der Rohrreaktor (11, 17) in einem ersten Teilabschnitt, der sich über 20 bis 60% seiner gesamten Länge erstreckt, einen inneren Durchmesser von 1,1 mm bis < 100 mm aufweist, und über einen stromabwärts auf den ersten Teilabschnitt folgenden zweiten Teilabschnitt, der sich über 80 bis 40 % seiner gesamten Länge erstreckt, einen inneren Durchmesser von 100 mm bis 500 mm.

11. Verfahren nach einem der vorstehenden Ansprüche, **dadurch gekennzeichnet, dass** der Rohrreaktor (11, 17) ein Verhältnis von Rohrlänge L zu Rohrinnendurchmesser $d_R$ von $L/d_R > 50$ aufweist.

12. Verfahren nach einem der vorstehenden Ansprüche, **dadurch gekennzeichnet, dass** der Hauptreaktor (8) ein kontinuierlich betriebener Rührreaktor ist.

13. Verfahren nach einem der vorstehenden Ansprüche, **dadurch gekennzeichnet, dass** die H-funktionelle Startersubstanz ausgewählt ist aus mindestens einer der Gruppe bestehend aus Polyetherpolyol, Polyesterpolyol, Polyethercarbonatpolyol, Wasser, Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, 3-Methyl-1,5-pentandiol, 1,6-Hexandiol; 1,8-Octandiol, 1,10-Decandiol, 1,12-Dodecandiol, 1,4-Bis-(hydroxymethyl)cyclohexan, Triethylenglykol, Tetraethylenglykol, Dipropylenglykol, Tripropylenglykol, Dibutylenglykol Trimethylolpropan, Glycerin, Trishydroxyethylisocyanurat, Rizinusöl, Pentaerythrit, Sorbit, Hexit, Saccharose, Stärke, Stärkehydrolysat, Cellulose, Cellulosehydrolysat, hydroxyfunktionalisierte Fette und hydroxyfunktionalisierte Öle.

14. Vorrichtung zur Herstellung von Polyethercarbonatpolyolen durch Anlagerung von einem oder mehreren Alkylenoxiden und Kohlendioxid an eine oder mehrere H-funktionellen Startersubstanzen in Gegenwart mindestens eines DMC-Katalysators, umfassend einen Hauptreaktor (8) und einen sich an diesen stromabwärts anschließenden Rohrreaktor (11, 17) als Nachreaktor, **dadurch gekennzeichnet, dass** der Rohrreaktor (11, 17) derart ausgestaltet ist, dass an dessen Ausgang (13) eine Temperatur einstellbar ist, die um wenigstens 10 °C oberhalb der Temperatur im Inneren des Hauptreaktors (8) liegt, wobei zur Einstellung der Temperatur am Ausgang (13) des Rohrreaktors (11, 17) diesem eine Heizeinrichtung (12) zugeordnet ist oder der Rohrreaktor (11, 17) mit einer Isolierung (18) versehen ist, so dass dieser einen Wärmeverlust gemäß VDI-Wärmeatlas, 2013 (DOI 10.1007/978-3-642-19981-3), Abschnitt E1 von höchstens 12 $W/m^2K$ aufweist, insbesondere von höchstens 8 $W/m^2K$.

15. Vorrichtung nach Anspruch 14, **dadurch gekennzeichnet, dass** der Rohrreaktor (11, 17) an seinem Ausgang (13) mit einem Thermofühler (16) ausgerüstet ist, wobei der Thermofühler (16) insbesondere zur Steuerung der Heizeinrichtung (12) des Rohrreaktors (11, 17) mit der Heizeinrichtung (12) gekoppelt ist.

## Claims

1. Process for preparing polyether carbonate polyols by adding one or more alkylene oxides and carbon dioxide onto one or more H-functional starter substances in the presence of at least one DMC catalyst, in which the reaction is conducted in a main reactor (8) and in a tubular reactor (11, 17) which follows downstream of the latter as postreactor, **characterized in that** a temperature at least 10°C above the temperature within the main reactor (8) is set at the exit (13) of the tubular reactor (11, 17).

2. Process according to Claim 1, **characterized in that** a temperature 10°C to 40°C above the temperature within the main reactor (8), especially 15 to 35°C, is set at the exit (13) of the tubular reactor (11, 17).

3. Process according to Claim 1 or 2, **characterized in that** the temperature is set at the exit (13) of the tubular reactor (11, 17) in such a way that this temperature, per % by weight of unreacted alkylene oxide measured at the entrance (19) to the tubular reactor (11, 17), is 2.5 to 12°C above the temperature within the main reactor (8), especially 3 to 7°C per % by weight of unreacted alkylene oxide.

4. Process according to any of the preceding claims, **characterized in that** the temperature at the exit (13) of the tubular reactor (11, 17) is set by means of a heating unit (12) which is assigned to the tubular reactor (11, 17) or by means of an insulation (18) of the tubular reactor (11, 17).

5. Process according to any of the preceding claims, **characterized in that** the reaction mixture (9) is fed from the main reactor (8) into the tubular reactor (11, 17) in such a way that the reaction mixture (9) at the entrance (19) to the tubular reactor (11, 17) has a content of unconverted alkylene oxides of 1% to 10% by weight, based on the reaction mixture (9), especially 2% to 6% by weight, preferably 3% to 4% by weight.

6. Process according to any of the preceding claims, **characterized in that**

   (i) the DMC catalyst is suspended in one or more H-functional starter substances,
   (ii) the suspension from (i) is combined with one or more alkylene oxides and with 10 to 200 bar of carbon dioxide, especially 15 to 180 bar, and
   (iii) the mixture resulting from (ii) is reacted in the main reactor (8) at a temperature of 80 to 150°C,

   wherein the pressures set in the tubular reactor (11, 17) are essentially the same pressures as in the main reactor (8), wherein preferably (ii-1

   ) the suspension from (i) is first combined in a first mixer (4) with one or more alkylene oxides and then in a second mixer (5) with 10 to 200 bar of carbon dioxide, or
   (ii-2) the suspension from (i) is first combined in a first mixer with 10 to 200 bar of carbon dioxide and then in a second mixer with one or more alkylene oxides.

7. Process according to any of Claims 1 to 5, **characterized in that** the DMC catalyst, the H-functional starter substance, the alkylene oxide and the carbon dioxide are fed directly to the main reactor (8) and reacted therein, especially at a temperature of 90 to 135°C and a reaction pressure of 20 to 180 bar, the DMC catalyst preferably being fed directly to the main reactor (8) as a dispersion in the H-functional starter substance, the alkylene oxide and the carbon dioxide.

8. Process according to any of the preceding claims, **characterized in that** the internal diameter of the tubular reactor (11, 17), at least in sections or over its entire length, is 1.1 mm to 900 mm.

9. Process according to any of the preceding claims, **characterized in that** the tubular reactor (11, 17) is formed from a continuous piece of tube or from at least two tubes following on from one another in flow direction.

10. Process according to any of the preceding claims, **characterized in that** the tubular reactor (11, 17), in a first subsection that extends over 20% to 60% of its total length, has an internal diameter of 1.1 mm to < 100 mm and, over a second subsection that follows downstream of the first subsection, and which extends over 80% to 40% of its total length, an internal diameter of 100 mm to 500 mm.

11. Process according to any of the preceding claims, **characterized in that** the tubular reactor (11, 17) has a ratio of tube length L to internal tube diameter $d_R$ of $L/d_R > 50$.

**12.** Process according to any of the preceding claims, **characterized in that** the main reactor (8) is a continuously operated stirred reactor.

**13.** Process according to any of the preceding claims, **characterized in that** the H-functional starter substance is selected from at least one of the group consisting of polyether polyol, polyester polyol, polyether carbonate polyol, water, ethylene glycol, diethylene glycol, propylene glycol, dipropylene glycol, propane-1,3-diol, butane-1,4-diol, butene-1,4-diol, butyne-1,4-diol, neopentyl glycol, pentane-1,5-diol, 3-methylpentane-1,5-diol, hexane-1,6-diol, octane-1,8-diol, decane-1,10-diol, dodecane-1,12-diol, 1,4-bis(hydroxymethyl)cyclohexane, triethylene glycol, tetraethylene glycol, dipropylene glycol, tripropylene glycol, dibutylene glycol, trimethylolpropane, glycerol, trishydroxyethyl isocyanurate, castor oil, pentaerythritol, sorbitol, hexitol, sucrose, starch, starch hydrolyzate, cellulose, cellulose hydrolyzate, hydroxy-functionalized fats and hydroxy-functionalized oils.

**14.** Apparatus for preparing polyether carbonate polyols by adding one or more alkylene oxides and carbon dioxide onto one or more H-functional starter substances in the presence of at least one DMC catalyst, comprising a main reactor (8) and a tubular reactor (11, 17) which follows downstream of the latter as postreactor, **characterized in that** the tubular reactor (11, 17) is configured such that a temperature at least 10°C above the temperature within the main reactor (8) can be set at the exit (13) of said tubular reactor, wherein the temperature at the exit (13) of the tubular reactor (11, 17) is set via assignment of a heating unit (12) thereto or provision of the tubular reactor (11, 17) with an insulation (18), such that it has a heat loss according to VDI-Wärmeatlas [VDI Heat Atlas], 2013 (DOI 10.1007/978-3-642-19981-3), Section E1 of not more than 12 $W/m^2K$, especially of not more than 8 $W/m^2K$.

**15.** Apparatus according to Claim 14, **characterized in that** the tubular reactor (11, 17) is equipped at its exit (13) with a temperature sensor (16), the temperature sensor (16) especially being coupled to the heating unit (12) for control of the heating unit (12) of the tubular reactor (11, 17).

## Revendications

**1.** Procédé pour la préparation de polyéthercarbonates polyols par addition d'un ou plusieurs oxydes d'alkylène et de dioxyde de carbone à une ou plusieurs substances de départ à fonctionnalité H en présence d'au moins un catalyseur DMC, dans lequel la réaction est effectuée dans un réacteur principal (8) et un réacteur tubulaire (11) relié en aval de celui-ci, qui est réalisé sous la forme d'un post-réacteur, **caractérisé en ce qu'**une température supérieure d'au moins 10°C à la température régnant à l'intérieur du réacteur principal (8) est réglée à la sortie (13) du réacteur tubulaire (11, 17).

**2.** Procédé selon la revendication 1, **caractérisé en ce qu'**une température qui est supérieure de 10°C à 40°C à la température régnant à l'intérieur du réacteur principal (8) est réglée à la sortie (13) du réacteur tubulaire (11, 17), en particulier de 15 à 35 °C.

**3.** Procédé selon la revendication 1 ou 2, **caractérisé en ce qu'**à la sortie (13) du réacteur tubulaire (11, 17), la température, mesurée à l'entrée (19) du réacteur tubulaire (11,17), est réglée de manière à ce qu'elle soit supérieure de 2,5 à 12°C à la température régnant à l'intérieur du réacteur principal (8) par % en poids d'oxyde d'alkylène n'ayant pas réagi, en particulier de 3 à 7 °C par % en poids d'oxyde d'alkylène n'ayant pas réagi.

**4.** Procédé selon l'une quelconque des revendications précédentes, **caractérisé en ce que** le réglage de la température à la sortie (13) du réacteur tubulaire (11, 17) est effectué par un dispositif de chauffage (12) qui est associé au réacteur tubulaire (11, 17) ou par une isolation (18) du réacteur tubulaire (11, 17).

**5.** Procédé selon l'une quelconque des revendications précédentes, **caractérisé en ce que** l'introduction du mélange réactionnel (9) provenant du réacteur principal (8) dans le réacteur tubulaire (11, 17) est effectuée de manière à ce que le mélange réactionnel (9) à l'entrée (19) du réacteur tubulaire (11, 17) présente une teneur en oxyde d'alkylène n'ayant pas réagi de 1 à 10% en poids par rapport au mélange réactionnel (9), en particulier 2 à 6 % en poids, et de préférence 3 à 4 % en poids.

**6.** Procédé selon l'une quelconque des revendications précédentes, **caractérisé en ce que**

(i) le catalyseur DMC est mis en suspension dans une ou plusieurs substances de départ à fonctionnalité H,
(ii) la suspension provenant de (i) est mélangée à un ou plusieurs oxydes d'alkylène et à du dioxyde de carbone

sous 10 à 200 bars, en particulier sous 15 à 180 bars, et
(iii) le mélange résultant de (ii) est mis à réagir à une température de 80 à 150°C dans le réacteur principal (8),

dans lequel des pressions sensiblement identiques à celles du réacteur principal (8) sont notamment réglées dans le réacteur tubulaire (11, 17), dans lequel de préférence

(ii-1) la suspension de (i) est d'abord mélangée dans un premier mélangeur (4) à un ou plusieurs oxydes d'alkylène puis est mélangée dans un deuxième mélangeur (5) à du dioxyde de carbone sous 10 à 200 bars, ou
(ii-2) la suspension de (i) est d'abord mélangée dans un premier mélangeur à du dioxyde de carbone sous 10 à 200 bars, puis dans un deuxième mélangeur à un ou plusieurs oxydes d'alkylène.

7. Procédé selon l'une quelconque des revendications 1 à 5, **caractérisé en ce que** le catalyseur DMC, la substance de départ à fonctionnalité H, l'oxyde d'alkylène et le dioxyde de carbone sont directement amenés au réacteur principal (8) et y sont mis à réagir, en particulier à une température de 90 à 135 °C et sous une pression réactionnelle de 20 à 180 bar, dans lequel le catalyseur DMC, de préférence sous forme de dispersion dans la substance à fonctionnalité H de départ, l'oxyde d'alkylène et le dioxyde de carbone sont directement amenés au réacteur principal (8).

8. Procédé selon l'une quelconque des revendications précédentes, **caractérisé en ce que** le diamètre intérieur du réacteur tubulaire (11, 17) est de 1,1 mm à 900 mm au moins par sections ou sur sa longueur totale.

9. Procédé selon l'une quelconque des revendications ci-dessus, **caractérisé en ce que** le réacteur tubulaire (11, 17) est réalisé à partir d'une pièce de tube continue ou d'au moins deux tubes consécutifs dans le sens de l'écoulement.

10. Procédé selon l'une quelconque des revendications précédentes, **caractérisé en ce que** le réacteur tubulaire (11, 17) présente un diamètre intérieur de 1,1 mm à < 100 mm dans une première section qui s'étend sur 20 à 60 % de sa longueur totale et un diamètre intérieur de 100 mm à 500 mm dans une seconde section située en aval de la première section, qui s'étend sur 80 à 40 % de sa longueur totale.

11. Procédé selon l'une quelconque des revendications précédentes, **caractérisé en ce que** le réacteur tubulaire (11, 17) présente un rapport entre la longueur de tube L et le diamètre intérieur du tube $d_R$ de $L/d_R > 50$.

12. Procédé selon l'une quelconque des revendications précédentes, **caractérisé en ce que** le réacteur principal (8) est un réacteur agitateur à fonctionnement continu.

13. Procédé selon l'une quelconque des revendications précédentes, **caractérisé en ce que** la substance de départ à fonctionnalité H est choisie parmi au moins l'un des groupes constitués par un polyéther-polyol, un polyester-polyol, un polyéther-carbonate-polyol, l'eau, l'éthylène glycol, le diéthylène glycol, le propylène glycol, le dipropylène glycol, le 1,3-propanediol, le 1,4-butanediol, le 1,4-butènediol, le 1,4-butindiol, le néopentyl glycol, le 1,5-pentanediol, le 3-méthyl-1,5-pentanediol, le 1,6-hexanediol ; le 1,8-octanediol, le 1,10-décanediol, le 1,12-dodécanediol, le 1,4-bis-(hydroxyméthyl)cyclohexane, le triéthylène glycol, le tétraéthylène glycol, le dipropylène glycol, le tripropylène glycol, le dibutylène glycol, le triméthylolpropane, la glycérine, le trishydroxyéthylisocyanurate, l'huile de ricin, le pentaérythritol, le sorbitol, l'hexitol, le saccharose, des amidons, un hydrolysat d'amidon, la cellulose, un hydrolysat de cellulose, des graisses à fonctionnalité hydroxy et des huiles à fonctionnalité hydroxy.

14. Dispositif pour la préparation de polyéthercarbonates polyols par addition d'un ou plusieurs oxydes d'alkylène et de dioxyde de carbone à une ou plusieurs substances de départ à fonctionnalité H en présence d'au moins un catalyseur DMC, comprenant un réacteur principal (8) et un réacteur tubulaire (11, 17) relié à celui-ci en aval en tant que post-réacteur, **caractérisé en ce que** le réacteur tubulaire (11, 17) est conçu de manière à pouvoir régler à sa sortie (13) une température qui est supérieure d'au moins 10°C à la température régnant à l'intérieur du réacteur principal (8), dans lequel, pour le réglage de la température à la sortie (13) du réacteur tubulaire (11, 17), un dispositif de chauffage (12) lui est associé ou le réacteur tubulaire (11, 17) est pourvu d'une isolation (18) de telle sorte qu'il présente une perte de chaleur, conformément à l'Atlas thermique VDI 2013 (DOI 10.1007/978-3-642-19981-3), section El, d'au plus 12 $W/m^2K$, en particulier d'au plus 8 $W/m^2K$.

15. Dispositif selon la revendication 14, **caractérisé en ce que** le réacteur tubulaire (11, 17) est équipé d'un capteur thermique (16) à sa sortie (13), dans lequel le capteur thermique (16) est couplé au dispositif de chauffage (12), en particulier pour la commande du dispositif de chauffage (12) du réacteur tubulaire (11, 17).

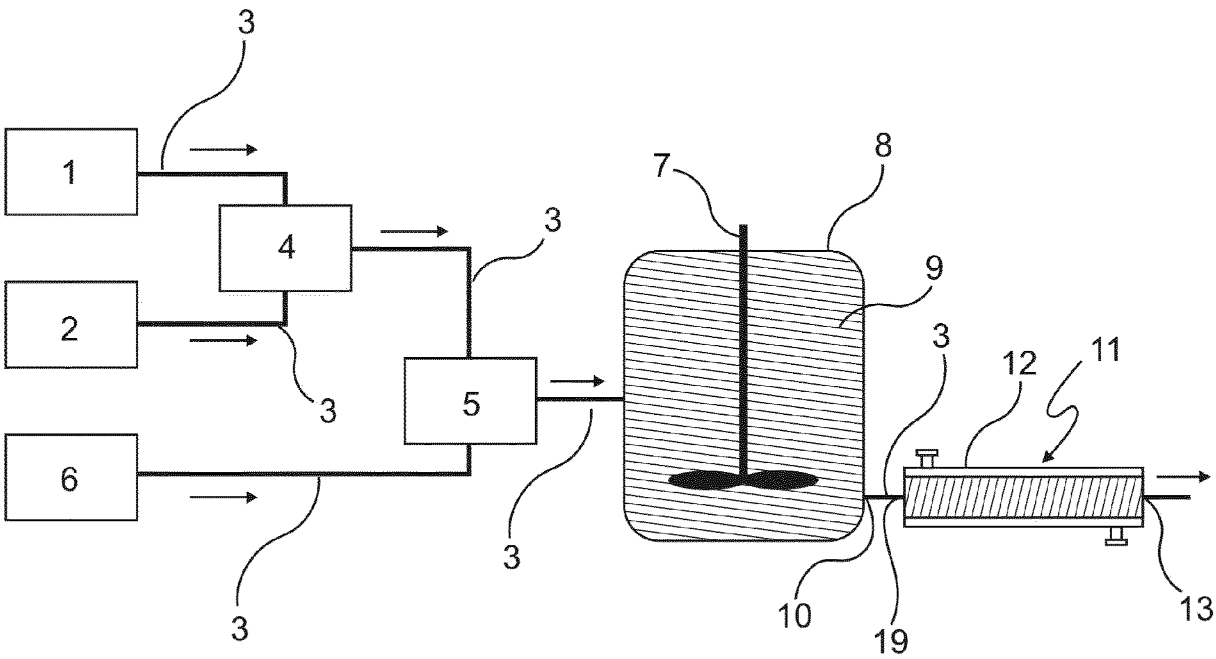


Fig. 1

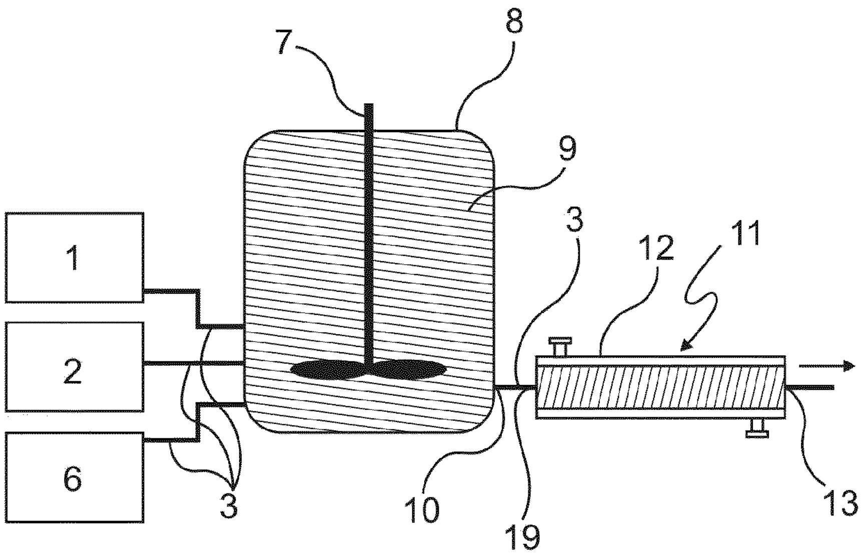


Fig. 2

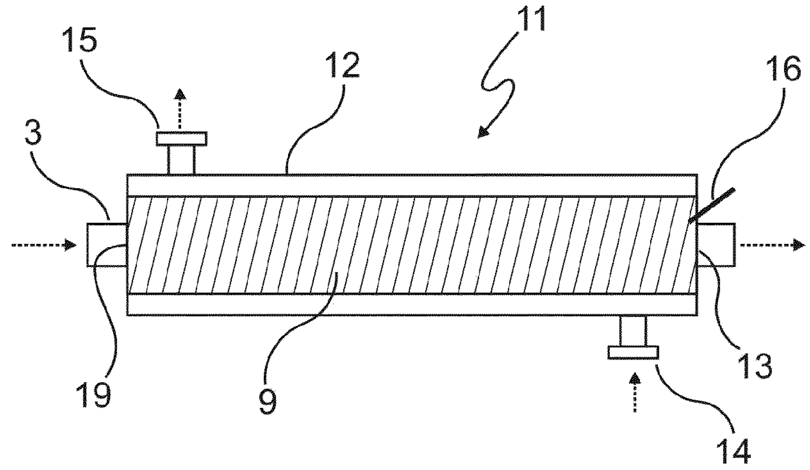


Fig. 3

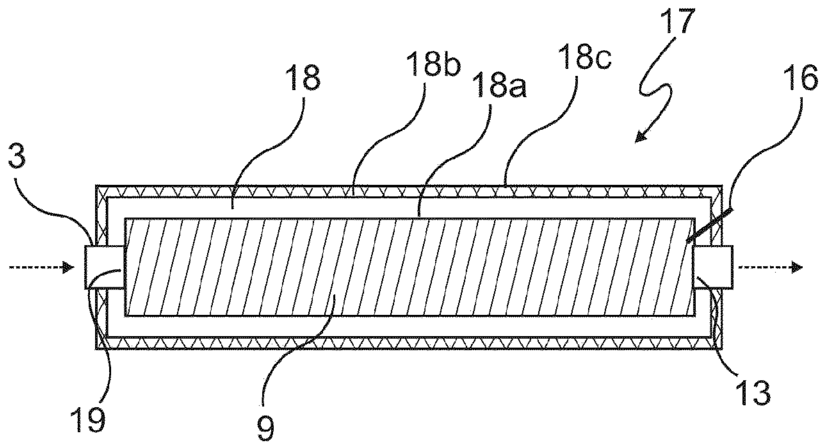


Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4500704 A
- WO 2006103213 A
- WO 2008092767 A
- WO 2007135154 A
- EP 2441788 A1
- EP 1448662 B1
- EP 2604641 A1
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- WO 2007135154 A1
- WO 200180994 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220